(19) Europäisches Patentamt
European Patent Office
Office européen des brevets

(11) **EP 4 787 551 A1**

(12) **EUROPEAN PATENT APPLICATION**
published in accordance with Art. 153(4) EPC

(43) Date of publication:
**05.08.2026 Bulletin 2026/32**

(21) Application number: **24922685.3**

(22) Date of filing: **26.08.2024**

(51) International Patent Classification (IPC):
**H01M 10/6567** (2014.01)  **H01M 10/655** (2014.01)
**H01M 10/6554** (2014.01)  **H01M 10/6556** (2014.01)
**H01M 50/204** (2021.01)

(52) Cooperative Patent Classification (CPC):
**H01M 10/6554; H01M 10/6556; H01M 50/204**

(86) International application number:
**PCT/CN2024/114643**

(87) International publication number:
**WO 2026/044464 (05.03.2026 Gazette 2026/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Contemporary Amperex Technology Co., Limited**
**Ningde, Fujian 352100 (CN)**

(72) Inventors:
• **SONG, Feiting**
  **Ningde, Fujian 352100 (CN)**

• **HOU, Yuepan**
  **Ningde, Fujian 352100 (CN)**
• **HUANG, Xiaoteng**
  **Ningde, Fujian 352100 (CN)**
• **LI, Xingxing**
  **Ningde, Fujian 352100 (CN)**
• **LIU, Lihui**
  **Ningde, Fujian 352100 (CN)**

(74) Representative: **Gong, Jinping**
**CocreateIP**
**Neumarkter Straße 21**
**81673 München (DE)**

(54) **HEAT EXCHANGE ASSEMBLY, BATTERY DEVICE, ELECTRIC APPARATUS, AND ENERGY STORAGE APPARATUS**

(57)  Embodiments of the present disclosure provide a heat exchange assembly, a battery apparatus, an electric device, and an energy storage device. The battery apparatus includes a case assembly, a battery cell assembly, and a heat exchange assembly. The case assembly has a first accommodating cavity inside. The battery cell assembly is disposed within the first accommodating cavity. The heat exchange assembly is disposed within the case assembly. The heat exchange assembly includes at least two flexible members. The at least two flexible members are stacked, and at least one medium flow channel is formed between the flexible members, where the at least one medium flow channel is configured to circulate a heat exchange medium, and the heat exchange medium is configured to exchange heat with the battery cell assembly.

FIG. 2

# Description

## TECHNICAL FIELD

The present disclosure relates to the field of battery technology, and in particular, to a heat exchange assembly, a battery apparatus, an electric device, and an energy storage device.

## BACKGROUND

This section is intended to provide background or context for embodiments of the present disclosure. The description herein is not admitted to be prior art by inclusion in this section.

In new energy vehicles equipped with a battery apparatus, the battery apparatus can be configured to provide all or part of the power. During use of the battery apparatus, battery cells within the battery apparatus generate heat. Excessive heat adversely affects the performance and service life of the battery apparatus. Therefore, how to implement effective heat dissipation for the battery cells of the battery apparatus has become an important research direction in this field.

## SUMMARY

In view of this, embodiments of the present disclosure aim to provide a heat exchange assembly, a battery apparatus, and an electric device, to improve heat exchange effects to some extent.

To this end, a first aspect of the embodiments of the present disclosure provides a battery apparatus including:

a case assembly having a first accommodating cavity inside;
a battery cell assembly disposed within the first accommodating cavity; and
a heat exchange assembly disposed within the case assembly; where the heat exchange assembly includes at least two flexible members, the at least two flexible members are stacked, and at least one medium flow channel is formed between the flexible members, the at least one medium flow channel is configured to circulate a heat exchange medium, and the heat exchange medium is configured to exchange heat with the battery cell assembly.

The battery apparatus provided in the embodiments of the present disclosure includes a case assembly, a battery cell assembly, and a heat exchange assembly. The battery cell assembly is disposed within a first accommodating cavity of the case assembly, and the case assembly protects the battery cell assembly. The heat exchange assembly is also disposed within the case assembly and is configured to exchange heat with the battery cell assembly. On one hand, the heat exchange assembly is made of flexible members. The flexible members are light in weight, contributing to reducing the weight of the battery apparatus, lowering production costs of the heat exchange assembly, and increasing the energy density of the battery apparatus. On the other hand, the heat exchange assembly is designed to include a flexible structure, allowing the heat exchange assembly to better fit to the case assembly and/or the battery cell assembly. This facilitates absorption of assembly tolerances of the heat exchange assembly, enhances the fit between the heat exchange assembly and the case assembly and/or the battery cell assembly without needing to use sealants or thermally conductive materials, and increases the effective heat exchange area between the heat exchange assembly and the case assembly and/or the battery cell assembly, thereby improving the heat exchange efficiency and effect of the heat exchange assembly.

In some embodiments, the heat exchange assembly is disposed outside the first accommodating cavity.

The heat exchange assembly is disposed outside the first accommodating cavity, to separate the heat exchange assembly from the battery cell assembly. This prevents a heat exchange medium of the heat exchange assembly from leaking and coming into contact with the battery cell assembly to cause a battery short circuit, thereby improving the reliability of the battery.

In some embodiments, the case assembly includes a case body and a bottom guard plate, the case body includes a first case portion and a second case portion, the first accommodating cavity is formed between the first case portion and the second case portion, a second accommodating cavity is formed between a bottom wall of the second case portion and the bottom guard plate, and the heat exchange assembly is disposed within the second accommodating cavity.

The bottom guard plate is disposed outside the case body to define the second accommodating cavity between the bottom guard plate and the second case portion. The heat exchange assembly is disposed within the second accommodating cavity for heat exchange with the case body, thereby implementing heat exchange with the battery cell assembly housed within the case body. In other words, the heat exchange assembly is disposed outside the first accommodating cavity of the case assembly, which can prevent short circuits of the battery caused by leakage of the heat exchange medium from the heat exchange assembly to some extent, improving the reliability of the battery. This can also increase the utilization rate of the internal accommodating cavity of the case assembly, thereby enhancing the compactness of the battery. Additionally, with arrangement of the bottom guard plate, the bottom guard plate cooperates with the case body to connect and protect the battery cell assembly, further improving the reliability of the case assembly.

In some embodiments, part of the bottom guard plate protrudes to form a connecting portion, and the connecting portion is sealingly connected to the second case portion.

The connecting portion is formed through protrusion, allowing the bottom guard plate to be connected to the second case portion while defining the second accommodating cavity between the bottom guard plate and the second case portion. Additionally, the connecting portion is sealingly connected to the second case portion, which can prevent mud, water, or the like from entering the second accommodating cavity, thereby protecting the heat exchange assembly within the second accommodating cavity.

In some embodiments, the case assembly further includes a sealing member, and the sealing member is sealingly sandwiched between the connecting portion and the second case portion.

The sealing member is configured to seal a gap between the connecting portion and the second case portion, further preventing mud, water, or the like from entering the second accommodating cavity, thereby improving the sealing performance between the bottom guard plate and the second case portion.

In some embodiments, a width of the sealing member is 2 mm to 20 mm.

The width of the sealing member is set to be 2 mm to 20 mm, effectively improving the sealing performance between the bottom guard plate and the second case portion while reducing costs.

In some embodiments, part of the bottom guard plate protrudes to form a limiting structure, and the limiting structure is configured to support the heat exchange assembly.

In this embodiment, the bottom guard plate is provided with the limiting structure to support the heat exchange assembly, improving stability of thermal interface contact of the heat exchange assembly, thereby enhancing the thermal management performance of the heat exchange assembly.

In some embodiments, part of the bottom guard plate protrudes to form a limiting structure, the heat exchange assembly is provided with a clearance hole, and the limiting structure runs through the clearance hole to support the second case portion.

This arrangement not only supports the second case portion but also positions the heat exchange assembly, improving the stability of the heat exchange assembly.

In some embodiments, part of the second case portion protrudes to form a limiting structure, and the limiting structure is configured to support the heat exchange assembly.

This helps to improve stability of thermal interface contact of the heat exchange assembly, thereby enhancing the thermal management performance of the heat exchange assembly.

In some embodiments, part of the second case portion protrudes to form a limiting structure, the heat exchange assembly is provided with a clearance hole, and the limiting structure runs through the clearance hole to support the bottom guard plate.

This arrangement not only supports the bottom guard plate but also positions the heat exchange assembly, improving the stability of the heat exchange assembly. Additionally, the second accommodating cavity can be defined between the bottom guard plate and the second case portion.

In some embodiments, a spacing between an edge of the clearance hole formed by the flexible member and the limiting structure is 0.5 mm to 1 mm.

This allows for positioning of the heat exchange assembly, and also improves efficiency of assembling the heat exchange assembly, the bottom guard plate, and the case body.

In some embodiments, a height of the limiting structure is greater than or equal to a thickness of the heat exchange assembly.

This allows the bottom guard plate and the second case portion to be supported by the limiting structure, with the flexible heat exchange assembly filling a gap between the bottom guard plate and the second case portion. This helps to mitigate deformation issues of the second case portion caused by insufficient support strength under pressure, thereby preventing the second case portion from directly contacting the heat exchange assembly and causing the heat exchange assembly to collapse. This helps to improve stability of thermal interface contact of the heat exchange assembly, thereby enhancing the thermal management performance of the heat exchange assembly.

In some embodiments, the limiting structure is disposed in a central region of the second accommodating cavity.

This improves support strength, and also improves structural strength of the bottom guard plate and/or the second case portion.

In some embodiments, the clearance hole is provided in plurality, and the plurality of clearance holes are symmetrically arranged with respective to a centerline of the heat exchange assembly.

In this embodiment, the plurality of clearance holes are symmetrically arranged with respective to the centerline of the heat exchange assembly, so that the corresponding limiting structures are also symmetrically arranged with respective to the centerline of the heat exchange assembly, further enhancing the structural strength of the heat exchange assembly.

In some embodiments, a length extension direction of the clearance hole is consistent with an arrangement direction of a plurality of battery cells in the battery cell assembly.

In this embodiment, the length extension direction of the clearance hole is set to be consistent with the arrangement direction of the plurality of battery cells in the battery cell assembly, helping to improve structural strength and heat exchange efficiency.

In some embodiments, a gap between the clearance hole and the limiting structure in a length direction is greater than or equal to 0 and less than or equal to 5 mm.

An appropriate gap between the clearance hole and the limiting structure in the length direction facilitates assembly positioning of the heat exchange assembly while meeting installation redundancy.

In some embodiments, the gap between the clearance hole and the limiting structure in the length direction is greater than or equal to 2 mm and less than or equal to 3 mm.

This further facilitates assembly positioning of the heat exchange assembly while meeting installation redundancy. In some embodiments, the limiting structure may alternatively be bonded to the second case portion via an adhesive layer.

In some embodiments, the at least two flexible members include a hot-pressed region, the hot-pressed region is formed by hot pressing the at least two flexible members, and the hot-pressed region divides the heat exchange assembly to form the at least one medium flow channel.

In this embodiment, the flexible members are sealed by a hot-pressing process, that is, the hot-pressed region is formed by hot pressing. The hot-pressed region divides the heat exchange assembly to form the at least one medium flow channel. Such forming manner is simple.

In some embodiments, a width of the hot-pressed region is 0.5 mm to 5 mm.

The width of the hot-pressed region is set to be 0.5 mm to 5 mm, which helps to improve the reliability of the medium flow channel of the flexible member while increasing coverage of the medium flow channel, thereby improving the heat exchange efficiency of the heat exchange assembly.

In some embodiments, the width of the hot-pressed region is 2 mm to 3 mm.

The width of the hot-pressed region is set to be 2 mm to 3 mm, which helps to improve the reliability of the medium flow channel of the flexible member while further increasing coverage of the medium flow channel, thereby further improving the heat exchange efficiency of the heat exchange assembly.

In some embodiments, the hot-pressed region is provided with a clearance hole.

The clearance hole is provided in the hot-pressed region to avoid the limiting structure, so that the hot-pressed region has a relatively high structural strength, improving reliability of the connection structure between the flexible member and the support member.

In some embodiments, the case assembly is provided with a limiting structure, the heat exchange assembly has a raised region and a recessed region, the medium flow channel is formed within the raised region, the recessed region is a region without the medium flow channel, and the limiting structure abuts against the recessed region.

In this embodiment, the case assembly is provided with the limiting structure, the heat exchange assembly has the raised region and the recessed region, the medium flow channel is formed within the raised region, the recessed region is the region without the medium flow channel, and the limiting structure abuts against the recessed region. The medium flow channel is formed within the raised region and the limiting structure of the case assembly abuts against the recessed region, implementing assembly positioning of the heat exchange assembly.

In some embodiments, the recessed region of the flexible member has a through clearance hole, and the limiting structure is inserted into the clearance hole.

In this embodiment, the heat exchange assembly is provided with the clearance hole to avoid the limiting structure, and the limiting structure runs through the clearance hole to implement positioning of the heat exchange assembly, improving the stability of the heat exchange assembly.

In some embodiments, part of the case assembly forms the limiting structure, and the limiting structure runs through the clearance hole to abut against another part of the case assembly.

In this embodiment, the heat exchange assembly is provided with the clearance hole to avoid the limiting structure, and the limiting structure runs through the clearance hole to abut against the another part of the case assembly, supporting the another part of the case assembly while positioning the heat exchange assembly, thereby improving the stability of the heat exchange assembly.

In some embodiments, the case assembly further includes an adhesive layer, and the limiting structure is bonded to the another part of the case assembly via the adhesive layer.

In this embodiment, the heat exchange assembly is bonded to the another part of the case assembly via the adhesive layer, improving the fit between the heat exchange surface of the heat exchange assembly and the another part of the case assembly, thereby improving heat exchange efficiency and heat exchange effect.

In some embodiments, the case assembly includes a case body and a bottom guard plate, the case body includes a first case portion and a second case portion, the first accommodating cavity is formed between the first case portion and the second case portion, the second accommodating cavity is formed between the bottom guard plate and the second case portion, the heat exchange assembly is disposed within the second accommodating cavity, and the limiting structure is formed on a side of the bottom guard plate and/or the second case portion close to the second accommodating cavity.

In this embodiment, the bottom guard plate is disposed outside the case body, so that the second accommodating cavity is defined between the bottom guard plate and the second case portion. The heat exchange assembly is disposed within the second accommodating cavity for heat exchange with the case body, thereby implementing heat exchange with the battery cell assembly housed within the case body. In other words, the heat exchange assembly is disposed outside the first accommodating cavity of the case assembly, which can prevent short circuits of the battery apparatus caused by leakage of the heat exchange medium from the heat exchange assembly to some extent, improving the reliability of the battery apparatus. This can also increase the utilization rate of the internal accommodating cavity of the case assembly, thereby enhancing the compactness of the battery apparatus. Additionally, with arrangement of the bottom guard plate, the bottom guard plate cooperates with the case body to connect and protect the battery cell assembly, further improving the reliability of the case assembly.

In some embodiments, the heat exchange assembly is disposed within the first accommodating cavity, and the limiting structure is formed on a side of the first case portion and/or the second case portion close to the first accommodating cavity.

This allows for direct contact between the heat exchange assembly and the battery cell assembly, improving heat exchange efficiency of the heat exchange assembly. The limiting structure of the case assembly abuts against the recessed region of the heat exchange assembly to implement assembly positioning of the heat exchange assembly.

In some embodiments, the at least two flexible members are arranged as metal-plastic composite films.

In this embodiment, since the metal-plastic composite films have small thickness and light weight, and the medium flow channel is formed between the at least two metal-plastic composite films, the heat exchange assembly is not affected by the extrusion process and does not require a large thickness, thereby reducing the overall thickness and weight of the heat exchange assembly. The heat exchange assembly does not react with the heat exchange medium flowing inside, so there is no risk of corrosion and leakage.

In some embodiments, the at least two flexible members are arranged as aluminum-plastic films.

The aluminum-plastic film has high barrier performance, as well as good cold stamping formability, puncture resistance, electrolyte stability, and electrical insulation.

In some embodiments, the flexible member is a layered structure, the flexible member includes a metal layer and a non-metal layer, and the metal layer and the non-metal layer are sequentially stacked.

In this embodiment, the flexible members with the sequentially stacked metal layer and non-metal layer have small thickness and light weight, and the medium flow channel is formed between the at least two flexible members, so that the heat exchange assembly is not affected by the extrusion process and does not require a large thickness, thereby reducing the overall thickness and weight of the heat exchange assembly. Additionally, the heat exchange assembly does not react with the heat exchange medium flowing inside, so there is no risk of corrosion and leakage.

In some embodiments, the metal layer includes one or more of aluminum foil, copper foil, and steel foil.

This allows the flexible member to have sufficient structural strength and provide isolation.

In some embodiments, the non-metal layer includes one or more of polypropylene, polyvinyl chloride, and polyethylene.

This allows the flexible member to have a waterproof effect.

In some embodiments, the non-metal layer is a hot-melt layer.

Herein, the non-metal layer is arranged as a hot-melt layer, that is, made of a hot-melt material, facilitating composite formation of the non-metal layer and the metal layer through hot melting, resulting in simple forming and high production efficiency.

In some embodiments, the flexible member is a layered structure, the flexible member includes a corrosion-resistant layer, an isolation layer, and a waterproof layer arranged sequentially, and the waterproof layer is closer to the medium flow channel than the corrosion-resistant layer.

In this embodiment, the flexible member is designed to include the corrosion-resistant layer, the isolation layer, and the waterproof layer arranged sequentially, with the waterproof layer closer to the medium flow channel than the corrosion-resistant layer, thereby improving the reliability of the heat exchange assembly.

In some embodiments, a thickness of the isolation layer is 6.5 $\mu$m to 100 $\mu$m.

In this embodiment, the thickness of the isolation layer is set to be 6.5 $\mu$m to 100 $\mu$m, allowing the flexible member to have sufficient structural strength and flexibility.

In some embodiments, the thickness of the isolation layer is 6.5 $\mu$m to 15 $\mu$m.

In this embodiment, the thickness of the isolation layer is set to be 6.5 $\mu$m to 15 $\mu$m, further allowing the flexible member to have sufficient structural strength and flexibility.

In some embodiments, a thickness of the corrosion-resistant layer is 5 $\mu$m to 20 $\mu$m.

In this embodiment, the thickness of the corrosion-resistant layer is set to be 5 $\mu$m to 20 $\mu$m, improving the wear resistance and toughness of the flexible member.

In some embodiments, a thickness of the waterproof layer is 50 $\mu$m to 120 $\mu$m.

In this embodiment, the thickness of the waterproof layer is set to be 50 $\mu$m to 120 $\mu$m, allowing sufficient structural strength for the waterproof layer to improve waterproof performance, and facilitating hot-pressing connection of the flexible member through the waterproof layer.

In some embodiments, a thickness of the flexible member is 0.05 mm to 0.3 mm.

The thickness of the flexible member is set to be 0.05 mm to 0.3 mm, allowing sufficient structural strength for the heat exchange assembly made of the flexible member while maintaining a small overall thickness for the heat exchange assembly. This helps to reduce the overall volume and weight of the battery, thereby increasing the energy density of the battery.

In some embodiments, the thickness of the flexible member is 0.08 mm to 0.2 mm.

The thickness of the flexible member is set to be 0.08 mm to 0.2 mm, allowing sufficient structural strength for the heat exchange assembly made of the flexible member while further maintaining a small overall thickness for the heat exchange assembly. This further helps to reduce the overall volume and weight of the battery, thereby further increasing the energy density of the battery.

In some embodiments, an elastic modulus of the flexible member is 0.1 MPa to 10000 MPa.

In this embodiment, the elastic modulus of the flexible member is set to be 0.1 MPa to 10000 MPa, allowing sufficient structural strength for the flexible member to improve the reliability of the heat exchange assembly, as well as sufficient deformation capability to enhance the fit between the heat exchange assembly and the case assembly and/or the battery cell assembly of the battery assembly. This increases the effective heat exchange area between the heat exchange assembly and the case assembly and/or the battery cell assembly of the battery assembly, thereby improving the heat exchange efficiency and effect of the heat exchange assembly.

A second aspect of the embodiments of the present disclosure provides a heat exchange assembly. The heat exchange assembly includes at least two flexible members, the at least two flexible members are stacked, and at least one medium flow channel is formed between the flexible members, where the at least one medium flow channel is configured to circulate a heat exchange medium, and the heat exchange medium is configured to exchange heat with a heat exchange unit assembly.

The heat exchange assembly provided in the embodiments of the present disclosure is disposed within a case assembly and is configured to exchange heat with the battery cell assembly. On one hand, the heat exchange assembly is made of flexible members. The flexible members are light in weight, contributing to reducing the weight of the battery apparatus, lowering production costs of the heat exchange assembly, and increasing the energy density of the battery apparatus. On the other hand, the heat exchange assembly is designed to include a flexible structure, allowing the heat exchange assembly to better fit to the case assembly and/or the battery cell assembly. This facilitates absorption of assembly tolerances of the heat exchange assembly, enhances the fit between the heat exchange assembly and the case assembly and/or the battery cell assembly without needing to use sealants or thermally conductive materials, and increases the effective heat exchange area between the heat exchange assembly and the case assembly and/or the battery cell assembly, thereby improving the heat exchange efficiency and effect of the heat exchange assembly.

In some embodiments, the heat exchange assembly is provided with a clearance hole, and the clearance hole extends through two opposite sides of the heat exchange assembly.

In this embodiment, the heat exchange assembly is provided with the clearance hole to avoid a limiting structure, facilitating positioning of the heat exchange assembly and improving the stability of the heat exchange assembly.

In some embodiments, the clearance hole is provided in plurality, and the plurality of clearance holes are symmetrically arranged with respective to a centerline of the heat exchange assembly.

In this embodiment, the plurality of clearance holes are symmetrically arranged with respective to the centerline of the heat exchange assembly, so that the corresponding limiting structures are also symmetrically arranged with respective to the centerline of the heat exchange assembly, further enhancing the structural strength of the heat exchange assembly.

In some embodiments, the at least two flexible members include a hot-pressed region, the hot-pressed region is formed by hot pressing the at least two flexible members, and the hot-pressed region divides the heat exchange assembly to form the at least one medium flow channel.

In this embodiment, the flexible members are sealed by a hot-pressing process, that is, the hot-pressed region is formed by hot pressing. The hot-pressed region divides the heat exchange assembly to form the at least one medium flow channel. Such forming manner is simple.

In some embodiments, a width of the hot-pressed region is 0.5 mm to 5 mm.

In this embodiment, the width of the hot-pressed region is set to be 0.5 mm to 5 mm, which helps to improve the reliability of the medium flow channel of the flexible member is enhanced while increasing coverage of the medium flow channel, thereby improving the heat exchange efficiency of the heat exchange assembly.

In some embodiments, the width of the hot-pressed region is 2 mm to 3 mm.

In this embodiment, the width of the hot-pressed region is set to be 2 mm to 3 mm, which helps to improve the reliability of the medium flow channel of the flexible member while further increasing coverage of the medium flow channel, thereby further improving the heat exchange efficiency of the heat exchange assembly.

In some embodiments, the hot-pressed region is provided with a clearance hole.

The clearance hole is provided in the hot-pressed region to avoid the limiting structure, so that the hot-pressed region has a relatively high structural strength, improving reliability of the connection structure between the flexible member and the support member.

In some embodiments, the heat exchange assembly has a raised region and a recessed region, the medium flow channel is formed within the raised region, the recessed region is a region without the medium flow channel, and the flexible member is formed in the recessed region by hot pressing.

In this embodiment, the case assembly is provided with the limiting structure, the heat exchange assembly has the raised region and the recessed region, the medium flow channel is formed within the raised region, the recessed region is the region without the medium flow channel, and the limiting structure abuts against the recessed region.

In this embodiment, the heat exchange assembly is provided with the raised region and the recessed region, with the medium flow channel formed within the raised region. The limiting structure of the case assembly abuts against the recessed region to implement assembly positioning of the heat exchange assembly.

In some embodiments, the recessed region is provided with a through clearance hole.

In this embodiment, the heat exchange assembly is provided with the clearance hole to avoid the limiting structure, and the limiting structure runs through the clearance hole to implement positioning of the heat exchange assembly, improving the stability of the heat exchange assembly.

In some embodiments, the at least two flexible members are arranged as metal-plastic composite films.

In this embodiment, since the metal-plastic composite films have small thickness and light weight, and the medium flow channel is formed between the at least two metal-plastic composite films, the heat exchange assembly is not affected by the extrusion process and does not require a large thickness, thereby reducing the overall thickness and weight of the heat exchange assembly. Additionally, due to the insulating properties of the metal-plastic composite film, the risk of insulation failure is avoided. The heat exchange assembly does not react with the heat exchange medium flowing inside, so there is no risk of corrosion and leakage.

In some embodiments, the at least two flexible members are arranged as aluminum-plastic films.

The aluminum-plastic film has high barrier performance, as well as good cold stamping formability, puncture resistance, electrolyte stability, and electrical insulation.

In some embodiments, the flexible member is a layered structure, the flexible member includes a metal layer and a non-metal layer, and the metal layer and the non-metal layer are sequentially stacked.

In this embodiment, the flexible members with the sequentially stacked metal layer and non-metal layer have small thickness and light weight, and the medium flow channel is formed between the at least two flexible members, so that the heat exchange assembly is not affected by the extrusion process and does not require a large thickness, thereby reducing the overall thickness and weight of the heat exchange assembly. Additionally, the heat exchange assembly does not react with the heat exchange medium flowing inside, so there is no risk of corrosion and leakage.

In some embodiments, the metal layer includes one or more of aluminum foil, copper foil, and steel foil.

This allows the flexible member to have sufficient structural strength and provide isolation.

In some embodiments, the non-metal layer includes one or more of polypropylene, polyvinyl chloride, and polyethylene.

This allows the flexible member to have a waterproof effect.

In some embodiments, the non-metal layer is a hot-melt material.

The non-metal layer is made of a hot-melt material, facilitating composite formation of the non-metal layer and the metal layer through hot melting, resulting in simple forming and high production efficiency.

In some embodiments, the flexible member is a layered structure, the flexible member includes a corrosion-resistant layer, an isolation layer, and a waterproof layer arranged sequentially, and the waterproof layer is closer to the medium flow channel than the corrosion-resistant layer.

In this embodiment, the flexible member is designed to include the corrosion-resistant layer, the isolation layer, and the waterproof layer arranged sequentially, with the waterproof layer closer to the medium flow channel than the corrosion-resistant layer, thereby improving the reliability of the heat exchange assembly.

In some embodiments, a thickness of the isolation layer is 6.5 $\mu$m to 100 $\mu$m.

In this embodiment, the thickness of the isolation layer is set to be 6.5 $\mu$m to 100 $\mu$m, allowing the flexible member to have sufficient structural strength and flexibility.

In some embodiments, the thickness of the isolation layer is 6.5 $\mu$m to 15 $\mu$m.

In this embodiment, the thickness of the isolation layer is set to be 6.5 $\mu$m to 15 $\mu$m, further allowing the flexible member to have sufficient structural strength and flexibility.

In some embodiments, a thickness of the corrosion-resistant layer is 5 $\mu$m to 20 $\mu$m.

In this embodiment, the thickness of the corrosion-resistant layer is set to be 5 $\mu$m to 20 $\mu$m, improving the wear resistance and toughness of the flexible member.

In some embodiments, a thickness of the waterproof layer is 50 $\mu$m to 120 $\mu$m.

In this embodiment, the thickness of the waterproof layer is set to be 50 $\mu$m to 120 $\mu$m, allowing

sufficient structural strength for the waterproof layer to improve waterproof performance, and facilitating hot-pressing connection of the flexible member through the waterproof layer.

In some embodiments, a thickness of the flexible member is 0.05 mm to 0.3 mm.

In this embodiment, the thickness of the flexible member is set to be 0.05 mm to 0.3 mm, allowing sufficient structural strength for the heat exchange assembly made of the flexible member while maintaining a small overall thickness for the heat exchange assembly. This helps to reduce the overall volume and weight of the battery apparatus, thereby increasing the energy density of the battery apparatus.

In some embodiments, the thickness of the flexible member is 0.08 mm to 0.2 mm.

In this embodiment, the thickness of the flexible member is set to be 0.08 mm to 0.2 mm, allowing sufficient structural strength for the heat exchange assembly made of the flexible member while further maintaining a small overall thickness for the heat exchange assembly. This further helps to reduce the overall volume and weight of the battery apparatus, thereby further increasing the energy density of the battery apparatus.

In some embodiments, an elastic modulus of the flexible member is 0.1 MPa to 10000 MPa.

In this embodiment, the elastic modulus of the flexible member is set to be 0.1 MPa to 10000 MPa, allowing sufficient structural strength for the flexible member to improve the reliability of the heat exchange assembly, as well as sufficient deformation capability to enhance the fit between the heat exchange assembly and the case assembly and/or the battery cell assembly of the battery assembly. This increases the effective heat exchange area between the heat exchange assembly and the case assembly and/or the battery cell assembly of the battery assembly, thereby improving the heat exchange efficiency and effect of the heat exchange assembly.

A third aspect of the embodiments of the present disclosure provides an electric device including the battery apparatus described above or the heat exchange assembly described above.

The battery apparatus of the electric device provided in the embodiments of the present disclosure includes a case assembly, a battery cell assembly, and a heat exchange assembly. The battery cell assembly is disposed within a first accommodating cavity of the case assembly, and the case assembly protects the battery cell assembly. The heat exchange assembly is also disposed within the case assembly and is configured to exchange heat with the battery cell assembly. On one hand, the heat exchange assembly is made of flexible members. The flexible members are light in weight, contributing to reducing the weight of the battery apparatus, lowering production costs of the heat exchange assembly, and increasing the energy density of the battery apparatus. On the other hand, the heat exchange assembly is designed to include a flexible structure, allowing the heat exchange assembly to better fit to the case assembly and/or the battery cell assembly. This facilitates absorption of assembly tolerances of the heat exchange assembly, enhances the fit between the heat exchange assembly and the case assembly and/or the battery cell assembly without needing to use sealants or thermally conductive materials, and increases the effective heat exchange area between the heat exchange assembly and the case assembly and/or the battery cell assembly, thereby improving the heat exchange efficiency and effect of the heat exchange assembly.

A fourth aspect of the embodiments of the present disclosure provides an energy storage device including the battery apparatus described above or the heat exchange assembly described above.

The battery apparatus of the energy storage device provided in the embodiments of the present disclosure includes a case assembly, a battery cell assembly, and a heat exchange assembly. The battery cell assembly is disposed within a first accommodating cavity of the case assembly, and the case assembly protects the battery cell assembly. The heat exchange assembly is also disposed within the case assembly and is configured to exchange heat with the battery cell assembly. On one hand, the heat exchange assembly is made of flexible members. The flexible members are light in weight, contributing to reducing the weight of the battery apparatus, lowering production costs of the heat exchange assembly, and increasing the energy density of the battery apparatus. On the other hand, the heat exchange assembly is designed to include a flexible structure, allowing the heat exchange assembly to better fit to the case assembly and/or the battery cell assembly. This facilitates absorption of assembly tolerances of the heat exchange assembly, enhances the fit between the heat exchange assembly and the case assembly and/or the battery cell assembly without needing to use sealants or thermally conductive materials, and increases the effective heat exchange area between the heat exchange assembly and the case assembly and/or the battery cell assembly, thereby improving the heat exchange efficiency and effect of the heat exchange assembly.

**BRIEF DESCRIPTION OF DRAWINGS**

FIG. 1 is a schematic structural diagram of a vehicle according to an embodiment of the present disclosure;

FIG. 2 is a perspective exploded view of a battery apparatus according to an embodiment of the present disclosure, where a temperature equalization layer of the heat exchange assembly is omitted;

FIG. 3 is a cross-sectional view of a battery apparatus according to an embodiment of the present disclosure;

FIG. 4 is an enlarged view of position A in FIG. 3;
FIG. 5 is a schematic diagram of a connection structure between a heat exchange assembly and a bottom guard plate according to an embodiment of the present disclosure, where a temperature equalization layer of the heat exchange assembly is omitted;
FIG. 6 is a schematic structural diagram of a heat exchange assembly with a temperature equalization layer omitted according to an embodiment of the present disclosure;
FIG. 7 is a schematic structural diagram of a bottom guard plate according to an embodiment of the present disclosure;
FIG. 8 is a perspective exploded view of a battery apparatus according to an embodiment of the present disclosure, where a first case portion is omitted;
FIG. 9 is a schematic structural diagram of a heat exchange assembly provided by a second embodiment of the present disclosure;
FIG. 10 is a cross-sectional view along a B-B direction of FIG. 9;
FIG. 11 is an enlarged view of position C in FIG. 10;
FIG. 12 is a perspective exploded view of a battery apparatus according to another embodiment of the present disclosure, where a heat exchange assembly is disposed within a first accommodating cavity;
FIG. 13 is a schematic structural diagram of a switch assembly according to an embodiment of the present disclosure;
FIG. 14 is a schematic structural diagram of a switch assembly according to another embodiment of the present disclosure, where the switch assembly includes a thermostat;
FIG. 15 is a schematic structural diagram of the switch assembly shown in FIG. 14 after heat is absorbed;
FIG. 16 is a schematic structural diagram of a heat exchange layer according to an embodiment of the present disclosure;
FIG. 17 is a schematic structural diagram of a heat exchange unit according to an embodiment of the present disclosure;
FIG. 18 is a cross-sectional view along a D-D direction of FIG. 17;
FIG. 19 is a schematic diagram of a connection structure of a heat exchange unit, a connector, and a current collector according to an embodiment of the present disclosure;
FIG. 20 is a perspective exploded view of a battery apparatus according to still another embodiment of the present disclosure, where a heat exchange assembly is disposed within a first accommodating cavity;
FIG. 21 is a schematic diagram of a connection structure of a connector and a quick-change joint according to an embodiment of the present disclosure;
FIG. 22 is a cross-sectional view of FIG. 21; and

FIG. 23 is an enlarged cross-sectional view of a battery apparatus according to another embodiment of the present disclosure, where a second case portion forms a limiting structure.

Description of reference signs: 10, battery cell assembly; 11, battery cell; 20, case assembly; 21, case body; 211, first case portion; 212, second case portion; 22, bottom guard plate; 221, connecting portion; 222, limiting structure; 23, first accommodating cavity; 24, second accommodating cavity; 30, heat exchange assembly; 31, flexible member; 311, raised region; 312, recessed region; 32, medium flow channel; 33, clearance hole; 34, hot-pressed region; 35, inlet; 36, outlet; 37, heat exchange layer; 371, buffer cavity; 372, heat exchange unit; 373, current collector; 374, connecting pipe; 375, connector; 3751, connecting channel; 3752, quick-change branch; 3753, drainage channel; 3754, quick-change interface; 376, quick-change joint; 3761, connecting cylinder; 3762, baffle; 38, temperature equalization layer; 381, temperature equalization member; 39, thermal insulation layer; 391, thermal insulation cavity; 392, flange; 40, switch assembly; 41, connecting plate; 42, control member; 43, thermostat; 100, battery apparatus; 200, controller; 300, motor; and 1000, vehicle.

## DESCRIPTION OF EMBODIMENTS

Unless otherwise specified, all embodiments and optional embodiments of the present disclosure can be combined with each other to form new technical solutions.
Unless otherwise specified, all technical features and optional technical features of the present disclosure can be combined with each other to form new technical solutions.
With the development of clean energy, an increasing number of devices use electrical energy as a driving force, and power batteries capable of storing significant amounts of electrical energy and undergoing multiple charge-discharge cycles have seen rapid development, such as lithium-ion batteries. These power batteries are not only applied in energy storage systems for hydropower, thermal power, wind power, and solar power plants but are also widely used in electric vehicles such as electric bicycles, electric motorcycles, and electric cars, as well as in aerospace and other fields.
In the embodiments of the present disclosure, a battery cell may be a secondary battery, where a secondary battery refers to a battery cell that can be recharged to activate active materials for continued use after discharge.
The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited in the embodiments of the present disclosure.

The battery cell typically includes an electrode assembly. The electrode assembly includes a positive electrode, a negative electrode, and a separator, where the separator is disposed between the negative electrode and the positive electrode. During charging and discharging of the battery cell, active ions (such as lithium ions) intercalate and deintercalate back and forth between the positive electrode and the negative electrode. The separator is arranged between the positive electrode and the negative electrode to prevent a short circuit between the positive electrode and the negative electrode and to allow active ions to pass through.

The electrode assembly may be a wound structure, a stacked structure, or a hybrid structure combining winding and stacking.

In some embodiments, the electrode assembly is a wound structure. A positive electrode plate and a negative electrode plate are wound into a wound structure.

In some embodiments, the electrode assembly is a stacked structure.

In an example, the positive electrode plate may be provided in plurality, the negative electrode plates may be provided in plurality, and the plurality of positive electrode plates and the plurality of negative electrode plates may be alternately stacked.

In an example, the positive electrode plate may be provided in plurality, and the negative electrode plate may be folded to form a plurality of stacked folding segments, with one positive electrode plate sandwiched between adjacent folding segments.

In an example, the positive electrode plate and the negative electrode plate each are folded to form a plurality of stacked folding segments.

In an example, the separator may be provided in plurality, each being disposed between any adjacent positive electrode plates or negative electrode plates.

In an example, a separator may be continuously arranged, disposed between any adjacent positive electrode plates or negative electrode plates by folding or winding.

In some embodiments, a shape of the electrode assembly may be cylindrical, flat, prismatic, or the like.

In some embodiments, the electrode assembly is provided with tabs, and the tabs can conduct current from the electrode assembly. The tabs include a positive tab and a negative tab.

In some embodiments, the battery cell may include a housing. The housing may be a steel housing, an aluminum housing, a plastic housing (for example, polypropylene), a composite metal housing (for example, a copper-aluminum composite housing), an aluminum-plastic film, or the like. In some embodiments, the housing may be a sealed structure or a non-sealed structure. In an example, in a case that the housing is a non-sealed structure, the housing serves to protect the electrode assembly, and a sealing bag is further included between the housing and the electrode assembly, where the sealing bag is configured to package the electrode assembly and an electrolyte. Specifically, the sealing bag may be a bag-shaped insulator or an aluminum-plastic film. In a case that the housing is a sealed structure, it is configured to package components such as the electrode assembly and the electrolyte.

In an example, the battery cell may be a cylindrical battery cell, a prismatic battery cell, a pouch battery cell, or a battery cell of other shapes. The prismatic battery cell includes a square-shell battery cell, a blade-shaped battery cell, or a multi-prismatic battery cell. The multi-prismatic battery cell may be, for example, a hexagonal prismatic battery cell, which is not particularly limited in the present disclosure.

In some embodiments, the housing includes an end cover and a shell, where the shell is provided with an opening, and the end cover covers the opening. The shell may be provided with one or more openings. One or more end covers may be provided.

In some embodiments, the housing is provided with at least one electrode terminal, where the electrode terminal is electrically connected to a tab. The electrode terminal may be directly connected to the tab, or may be indirectly connected to the tab via a current collector. The electrode terminal may be disposed on the end cover or on the shell.

In some embodiments, the energy storage device includes an energy storage container, an energy storage cabinet, or the like.

Power plants have an increasingly high requirement on area energy density of energy storage containers. Therefore, to increase power capacity, the weight of the containers also increases correspondingly. However, containers need to be transported from the production site to the usage site by land transportation and/or sea transportation. Usually, there are weight limits for land transportation and sea transportation, creating a conflict between the improvement of the energy density and the weight of the energy storage container.

During use of the battery apparatus, battery cells within the battery apparatus generate heat. Excessive heat adversely affects the performance and service life of the battery apparatus. Therefore, how to implement effective heat dissipation for the battery cells of the battery apparatus has become an important research direction in this field. In related technologies, a cooling system is disposed within a battery apparatus case to cool battery cells in a battery apparatus. The cooling system may include a plurality of aluminum water-cooling plates arranged within the battery apparatus case, with surfaces of the plurality of water-cooling plates in contact with surfaces of the battery cells in the battery apparatus. During the use process, a heat exchange medium, such as water, flows through the plurality of water-cooling plates, thereby dissipating heat from the battery cells and cooling the battery cells. However, when the aluminum water-cooling plates in the cooling system do not fit well to the surfaces of the battery cells in the battery apparatus, heat exchange efficiency and effect are suboptimal. Additionally, during assembly with the battery cell assembly, assembly tolerance compensation is required, involving the use of a sealant, which results in high production costs. Furthermore, the water-cooling plates and the battery apparatus case have high rigidity, requiring the use of a rigid structural adhesive, which makes disassembly difficult. If a non-drying adhesive, a soft adhesive, or a double-sided tape is used, the water-cooling plates and the battery apparatus case have good rigidity, but adhesive detachment issues may exist when there are gaps or flatness mismatches.

In view of this, to improve the heat exchange efficiency and effect of heat exchange assemblies, embodiments of the present disclosure provide a battery apparatus. The battery apparatus includes a case assembly, a battery cell assembly, and a heat exchange assembly. The case assembly has a first accommodating cavity inside. The battery cell assembly is disposed within the first accommodating cavity. The heat exchange assembly is disposed within the case assembly. The heat exchange assembly includes at least two flexible members. The at least two flexible members are stacked, and at least one medium flow channel is formed between the flexible members, where the at least one medium flow channel is configured to circulate a heat exchange medium, and the heat exchange medium is configured to exchange heat with the battery cell assembly.

The battery apparatus provided in the embodiments of the present disclosure includes the case assembly, the battery cell assembly, and the heat exchange assembly. The battery cell assembly is disposed within the first accommodating cavity of the case assembly, and the case assembly is configured to protect the battery cell assembly. The heat exchange assembly is also disposed within the case assembly and is configured to exchange heat with the battery cell assembly. On one hand, the heat exchange assembly is made of flexible members. The flexible members are light in weight, contributing to reducing the weight of the battery apparatus, lowering production costs of the heat exchange assembly, and increasing the energy density of the battery apparatus. On the other hand, the heat exchange assembly is designed to include a flexible structure. The flexible structure has a certain deformation capability, allowing the heat exchange assembly to better fit and adapt to the case assembly and/or the battery cell assembly. This facilitates absorption of assembly tolerances of the heat exchange assembly, enhances the fit between the heat exchange assembly and the case assembly and/or the battery cell assembly, and increases the effective heat exchange area between the heat exchange assembly and the case assembly and/or the battery cell assembly, thereby improving the heat exchange efficiency and effect of the heat exchange assembly.

The technical solutions described in the embodiments of the present disclosure are applicable to electric devices using a battery apparatus. The electric device includes the battery apparatus according to any embodiment of the present disclosure, where the battery apparatus is configured to provide electrical energy.

The electric device may be a vehicle, a mobile phone, a portable device, a notebook computer, a ship, a spacecraft, an electric toy, an electric tool, or the like. The vehicle may be a fuel vehicle, a gas vehicle, or a new energy vehicle, where the new energy vehicle may be a pure electric vehicle, a hybrid vehicle, or an extended-range vehicle. The spacecraft includes an airplane, a rocket, a space shuttle, a spaceship, or the like. The electric toy includes a fixed or mobile electric toy, such as a game console, an electric car toy, an electric ship toy, an electric airplane toy, or the like. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, an electric planer, or the like. The embodiments of the present disclosure impose no particular limitations on the foregoing electric device.

It should be noted that the technical solutions described in the embodiments of the present disclosure are not limited to the battery apparatus described above but are also applicable to all electric devices and energy storage devices including a battery apparatus. For brevity, the following embodiments are described using an electric vehicle as an example.

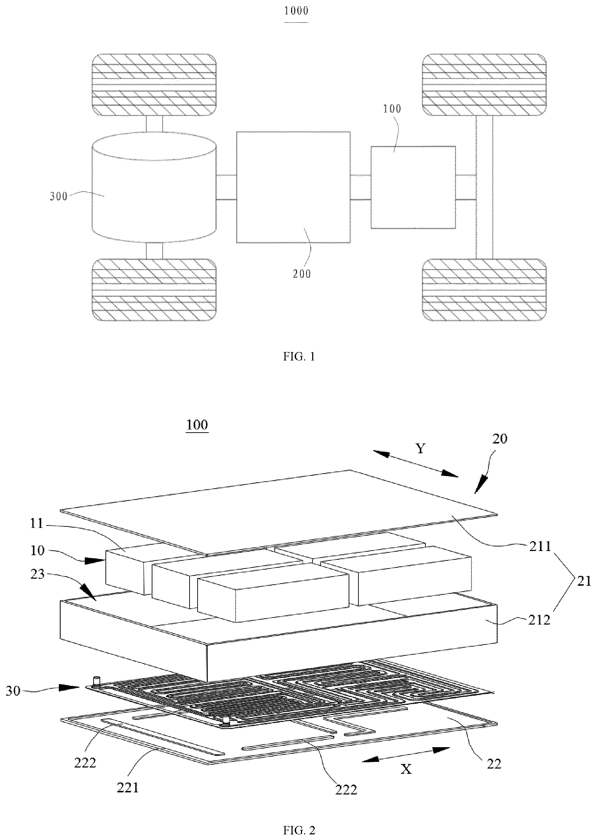

Referring to FIG. 1, a controller 200, a motor 300, and a battery apparatus 100 may be disposed inside a vehicle 1000. The controller 200 is configured to control the battery apparatus 100 to supply power to the motor 300. For example, the battery apparatus 100 may be disposed at the bottom, front, or rear of the vehicle 1000. The battery apparatus 100 may be configured to supply power to the vehicle 1000. For example, the battery apparatus 100 may be used in a circuit system of the vehicle 1000 as an operational power source for the vehicle 1000, for example, to satisfy power needs of start, navigation, and driving of the vehicle 1000. In another embodiment of the present disclosure, the battery apparatus 100 may not only serve as an operational power source for the vehicle 1000 but also as a driving power source for the vehicle 1000, replacing or partially replacing fuel or natural gas to provide driving power for the vehicle 1000.

Referring to FIG. 2, to meet different power usage demands, the battery apparatus includes a battery cell assembly 10, where the battery cell assembly 10 may include a plurality of battery cells 11. The battery cell 11 refers to a smallest unit constituting a battery apparatus module or a battery apparatus pack. The plurality of battery cells 11 may be connected in series, parallel, or series-parallel, where being connected in series-parallel refers to a combination of series and parallel connections of the plurality of battery cells 11. The plurality of battery cells 11 may be directly connected in series, parallel, or series-parallel and accommodated as a whole within a case assembly 20. Certainly, the battery apparatus 100 may alternatively be formed by a plurality of battery cells 11 being connected in series, parallel, or series-parallel first to form a battery apparatus module and then a plurality of battery apparatus modules being connected in series, parallel, or series-parallel to form an entirety which is accommodated within the case assembly 20. The battery apparatus 100 may further include other structures. For example, the battery apparatus 100 may further include a busbar component for implement electrical connections among the plurality of battery cells 11. Each battery cell 11 may be a secondary battery apparatus or a primary battery apparatus, or may be a lithium-sulfur battery apparatus, a sodium-ion battery apparatus, or a magnesium-ion battery apparatus, without limitation thereto. The battery cell 11 may be cylindrical, flat, rectangular, or of other shapes.

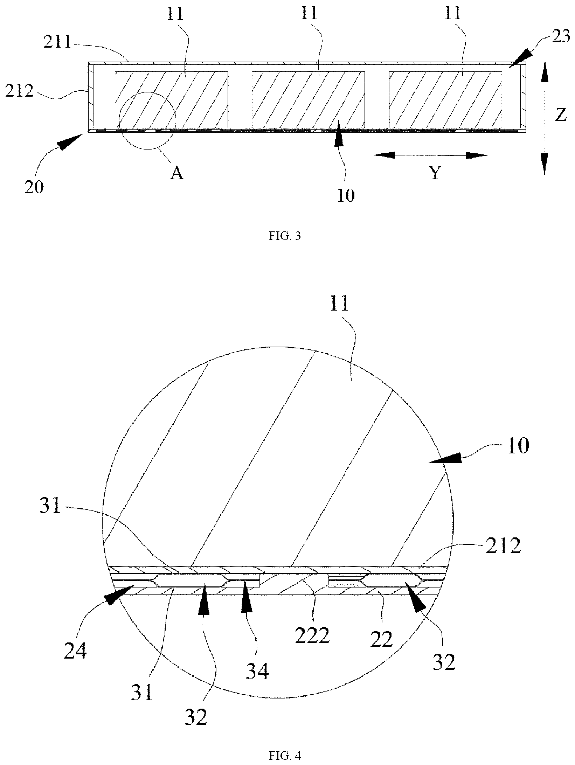

Referring to FIGs. 2 to 4, an embodiment of the present disclosure provides a battery apparatus. The battery apparatus includes a case assembly 20, a battery cell assembly 10, and a heat exchange assembly 30. The case assembly 20 has a first accommodating cavity 23 inside. The battery cell assembly 10 is disposed within the first accommodating cavity 23. The heat exchange assembly 30 is disposed within the case assembly 20. The heat exchange assembly 30 includes at least two flexible members 31. Referring to FIG. 3, the at least two flexible members 31 are stacked, and at least one medium flow channel 32 is formed between the flexible members 31, where the at least one medium flow channel 32 is configured to circulate a heat exchange medium, and the heat exchange medium is configured to exchange heat with the battery cell assembly 10.

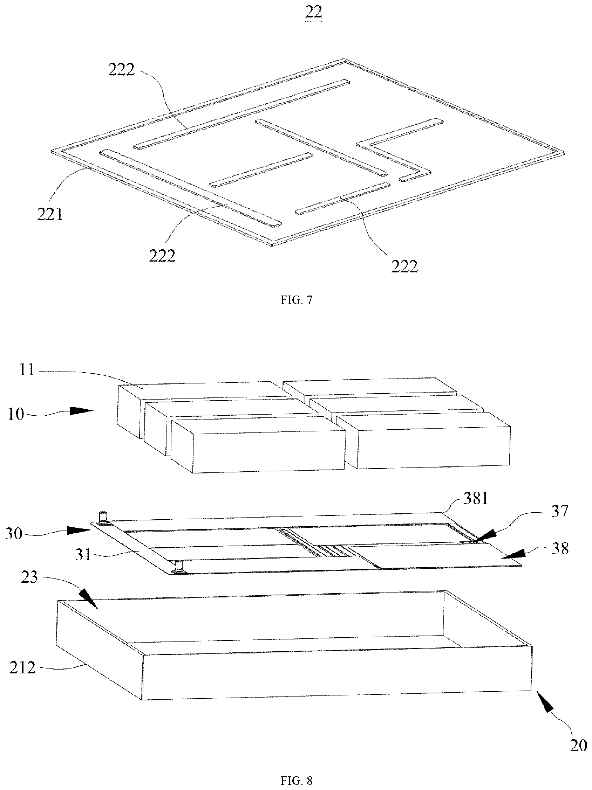

Referring to FIGs. 2 and 8, the battery apparatus includes a case assembly 20 and a battery cell assembly 10, where the battery cell assembly 10 includes at least one battery cell 11, and the battery cell 11 is disposed within a first accommodating cavity 23 of the case assembly 20.

The case assembly 20 may be a simple three-dimensional structure such as a separate rectangular parallelepiped, cylinder, or sphere, or a complex three-dimensional structure formed by combining simple three-dimensional structures such as rectangular parallelepipeds, cylinders, or spheres. A material of the case assembly 20 may be an alloy material such as aluminum alloy or iron alloy, or a polymer material such as polycarbonate or polyisocyanurate foam, or a composite material such as glass fiber reinforced epoxy resin.

The case assembly 20 is configured to package the battery cell assembly 10. The case assembly 20 can prevent liquids or other foreign objects from affecting the charging or discharging of the battery cell assembly 10.

For example, the case assembly 20 is typically a rectangular parallelepiped structure, where a length direction and a width direction of the case assembly 20 are both parallel to a horizontal plane, the length direction of the case assembly 20 is parallel to a longest edge of a rectangular parallelepiped structure of the case assembly 20, and a height direction of the case assembly 20 is perpendicular to the ground. For example, as shown in FIGs. 3 and 7, the length direction of the case assembly 20 is denoted as X, the width direction of the case assembly 20 is denoted as Y, and the height direction of the case assembly 20 is denoted as Z.

An embodiment of the present disclosure provides a heat exchange assembly 30, where the heat exchange assembly 30 includes at least two flexible members 31. The at least two flexible members 31 are stacked, and at least one medium flow channel 32 is formed between the flexible members 31, where the at least one medium flow channel 32 is configured to circulate a heat exchange medium, and the heat exchange medium is configured to exchange heat with the battery cell assembly 10.

Herein, the heat exchange assembly 30 being disposed within the case assembly 20 means that the heat exchange assembly 30 may be disposed within the first accommodating cavity 23, that is, may be in direct contact with the battery cell assembly 10, or may be disposed outside the first accommodating cavity 23 to transfer heat through an intermediate medium, thereby implementing heat exchange between the heat exchange assembly 30 and the battery cell assembly 10.

The heat exchange assembly 30 including at least two flexible members 31 means that the number of flexible members 31 included in the heat exchange assembly 30 may be two or more than two.

Herein, "flexible" in the flexible member 31 refers to a material property of the structure. This type of property may be imparted by the lightweight nature of the material, or may be imparted by at least any one nature of the material such as thickness, stiffness, strength, or elastic modulus. In an example, a material of the flexible member 31 may be a material lighter than conventional structures such as aluminum plates or steel plates, and its flexibility can be controlled by the thickness, width, length, and material type of the flexible member 31. In the embodiments of the present disclosure, the heat exchange assembly 30 is configured in the form of flexible members 31, reducing the weight of the heat exchange assembly 30.

The at least one medium flow channel 32 being formed between the at least two flexible members 31 means that the heat exchange assembly 30 has the medium flow channel 32 formed between adjacent flexible members 31. The heat exchange medium flows through the medium flow channel 32 to exchange heat with the battery cell assembly 10.

It should be noted that the heat exchange medium is not limited to a specific type herein, as long as it can provide a cooling effect for the battery cell 11, such as being gaseous or liquid. In the embodiments of the present disclosure, the heat exchange medium being a coolant is used as an example for illustration.

For example, the heat exchange assembly 30 further includes an inlet 35 and an outlet 36, where both the inlet 35 and the outlet 36 are in communication with the medium flow channel 32.

Herein, the inlet 35 and the outlet 36 of the heat exchange assembly 30 are configured to be connected to pipelines of a liquid storage device, such as an air conditioning system or a water tank, of a vehicle or an electric device.

It should be noted that a specific number of the medium flow channels 32 is not limited herein. One or more medium flow channels 32 may be provided.

The term "a plurality" in the embodiments of the present disclosure refers to a quantity of two or more.

A principle of the heat exchange assembly 30 exchanging heat with the battery cell assembly 10 is as follows: A heat exchange medium output from a heat exchange medium source (not shown in the figure) enters the medium flow channel via the inlet 35 of the heat exchange assembly 30. After the heat exchange medium exchanges heat with the battery cell assembly 10, the heat exchange medium flows out via the outlet 36 of the heat exchange assembly 30, completing the heat exchange with the battery cell assembly 10.

Herein, the heat exchange assembly 30 exchanging heat with the battery cell assembly 10 may be: dissipating heat from the battery cell assembly 10 or heating the battery cell assembly 10.

A principle of the heat exchange assembly 30 dissipating heat from the battery cell assembly 10 is as follows: The heat exchange medium output from the heat exchange medium source enters the medium flow channel via the inlet 35 of the heat exchange assembly 30. After the heat exchange medium absorbs heat generated during operation of the battery cell assembly 10, the heat exchange medium flows out via the outlet 36 of the heat exchange assembly 30 to release the heat, thereby completing the cooling and heat dissipation of the battery cell assembly 10.

A principle of the heat exchange assembly 30 heating the battery cell assembly 10 is as follows: The heat exchange medium output from the heat exchange medium source enters the medium flow channel via the inlet 35 of the heat exchange assembly 30. After the heat exchange medium transfers heat to the battery cell assembly 10 to heat the battery cell assembly 10, the heat exchange medium flows out via the outlet 36 of the heat exchange assembly 30, completing the heating of the battery cell assembly 10.

The flexible members 31 are arranged as a flexible structure, where the flexible member 31 has a certain expandability or contractibility. This may also be understood as follows: the flexible member 31 may be an elastically deformable structure, and the flexible member 31 has the ability to deform and recover from deformation. Therefore, the heat exchange assembly 30 can be formed as a conformal structure, allowing the heat exchange assembly 30 to better adapt to an external contour shape of the battery cell or other components, thereby enhancing the fit between the heat exchange assembly 30 and the case assembly 20 and/or the battery cell assembly 10. This increases the effective heat exchange area between the heat exchange assembly 30 and the case assembly 20 and/or the battery cell assembly 10, thereby improving the heat exchange efficiency.

It should be noted that the flexible member 31 may have conductive performance, maintaining equipotential with the case assembly 20. The flexible member 31 may also have electrical insulation properties, with no need for insulation treatment, thereby reducing the risk of electrical leakage and production costs of the battery apparatus 100, and improving the reliability of the battery apparatus 100.

The battery apparatus provided in the embodiments of the present disclosure includes the case assembly 20, the battery cell assembly 10, and the heat exchange assembly 30. The battery cell assembly 10 is disposed within the first accommodating cavity 23 of the case assembly 20, and the case assembly 20 is configured to protect the battery cell assembly 10. The heat exchange assembly 30 is also disposed within the case assembly 20 and is configured to exchange heat with the battery cell assembly 10. On one hand, the heat exchange assembly 30 is made of flexible members 31. The flexible members 31 are light in weight, contributing to reducing the weight of the battery apparatus 100, lowering production costs of the heat exchange assembly 30, and increasing the energy density of the battery apparatus 100. On the other hand, the flexible members 31 are arranged as a flexible structure. The flexible structure has a certain deformation capability, allowing the heat exchange assembly 30 to better fit and adapt to the case assembly 20 and/or the battery cell assembly 10. This facilitates absorption of assembly tolerances of the heat exchange assembly 30, enhances the fit between the heat exchange assembly 30 and the case assembly 20 and/or the battery cell assembly 10, and increases the effective heat exchange area between the heat exchange assembly 30 and the case assembly 20 and/or the battery cell assembly 10, thereby improving the heat exchange efficiency and effect of the heat exchange assembly 30.

Herein, the heat exchange assembly 30 may be disposed within the first accommodating cavity 23, that is, the heat exchange assembly 30 can be in direct contact with the battery cell assembly 10, thereby further improving the heat exchange efficiency between the heat exchange assembly 30 and the battery cell assembly 10.

Certainly, in other embodiments, the heat exchange assembly 30 may be disposed outside the first accommodating cavity 23.

In other words, at least part of the heat exchange assembly 30 is disposed outside the first accommodating cavity 23 to separate the heat exchange assembly 30 from the battery cell assembly 10.

In related technologies, the heat exchange assembly and the battery cell assembly are disposed in the same space, ensuring the heat exchange efficiency. However, when the battery cell assembly is in an extremely abnormal condition, the heat exchange medium in the cooling system may leak, and the leaked heat exchange medium increases the risk of short circuits in the battery cell assembly within the battery apparatus case to some extent, affecting the reliability of the battery apparatus.

In this embodiment, the heat exchange assembly 30 is disposed outside the first accommodating cavity 23, separating the heat exchange assembly 30 from the battery cell assembly 10. This reduces the risk of contact between a leaked heat exchange medium of the heat exchange assembly 30 and the battery cell assembly 10, thereby reducing the risk of short circuits in the battery apparatus 100 and improving the reliability of the battery apparatus 100.

The case assembly 20 is configured to accommodate the battery cell assembly 10. The case assembly 20 may be of various structures. In some embodiments, referring again to FIG. 2, the case assembly 20 includes a case body 21. The case body 21 may include a first case portion 211 and a second case portion 212. The first case portion 211 and the second case portion 212 are engaged with each other, and the first case portion 211 and the second case portion 212 together define the first accommodating cavity 23 for accommodating the battery cell assembly 10. The second case portion 212 may be a hollow structure with an opening on one side, and the first case portion 211 may be a plate-shaped structure, where the first case portion 211 covers the opening side of the second case portion 212 to form the case body 21 having the first accommodating cavity 23. Alternatively, the first case portion 211 and the second case portion 212 may each be a hollow structure with an opening on one side, where the opening side of the first case portion 211 covers the opening side of the second case portion 212 to form the case body 21 having the first accommodating cavity 23. Certainly, the first case portion 211 and the second case portion 212 may be of various shapes, such as cylindrical or rectangular parallelepiped.

To improve sealing performance after the first case portion 211 and the second case portion 212 are connected, a sealing member, such as a sealant or a sealing ring, may further be disposed between the first case portion 211 and the second case portion 212.

Assuming the first case portion 211 covers the top of the second case portion 212, the first case portion 211 may also be referred to as an upper case cover, and the second case portion 212 may also be referred to as a lower case cover.

In some other embodiments, referring again to FIG. 2, the case assembly 20 may alternatively be designed to include a case body 21 and a bottom guard plate 22 as needed. A second accommodating cavity 24 is formed between the bottom guard plate 22 and an outer side wall of the case body 21. The heat exchange assembly 30 is disposed within the second accommodating cavity 24.

It should be noted that the bottom guard plate 22 may be disposed at a bottom of the case body 21. The bottom guard plate 22 may alternatively be disposed at a top of the case body 21 or on a side surface of the case body 21. The bottom guard plate 22 protects the case body 21, reducing impact of external debris on the case body 21 during vehicle operation, thereby improving the reliability of the battery cell assembly 10.

For example, referring to FIGs. 2 to 4, the case assembly 20 includes a case body 21 and a bottom guard plate 22. The case body 21 includes a first case portion 211 and a second case portion 212. The first accommodating cavity 23 is formed between the first case portion 211 and the second case portion 212, and the second accommodating cavity 24 is formed between a bottom wall of the second case portion 212 and the bottom guard plate 22. The heat exchange assembly 30 is disposed within the second accommodating cavity 24.

Herein, the heat exchange assembly 30 may be disposed only within the second accommodating cavity 24, or the heat exchange assembly 30 may be disposed within the second accommodating cavity 24 and other regions outside the second accommodating cavity 24.

The second accommodating cavity 24 is formed between the bottom wall of the second case portion 212 and the bottom guard plate 22, meaning that the first accommodating cavity 23 is separated from the second accommodating cavity 24.

Herein, the bottom guard plate 22 is disposed, protecting the case assembly 20 and the battery cell 11 while supporting and protecting the heat exchange assembly 30.

The heat exchange assembly 30 is disposed within the second accommodating cavity 24, that is, the heat exchange assembly 30 is disposed outside the first accommodating cavity 23, to separate the heat exchange assembly 30 from the battery cell assembly 10. This prevents the heat exchange medium of the heat exchange assembly 30 from leaking and coming into contact with the battery cell assembly 10 to cause a short circuit of the battery apparatus 100, thereby improving the reliability of the battery apparatus 100.

In this embodiment, the bottom guard plate 22 is disposed outside the case body 21, so that the second accommodating cavity 24 is defined between the bottom guard plate 22 and the second case portion 212. The heat exchange assembly 30 is disposed within the second accommodating cavity 24 for heat exchange with the case body 21, thereby implementing heat exchange with the battery cell assembly 10 housed within the case body 21. In other words, the heat exchange assembly 30 is disposed outside the first accommodating cavity 23 of the case assembly 20, which can prevent short circuits of the battery apparatus 100 caused by leakage of the heat exchange medium from the heat exchange assembly 30 to some extent, improving the reliability of the battery apparatus 100. This can also increase the utilization rate of the internal accommodating cavity of the case assembly 20, thereby enhancing the compactness of the battery apparatus 100. Additionally, with arrangement of the bottom guard plate 22, the bottom guard plate 22 cooperates with the case body 21 to connect and protect the battery cell assembly 10, further improving the reliability of the case assembly 20.

In some embodiments, referring to FIGs. 2 to 7, part of the bottom guard plate 22 protrudes to form a connecting portion 221, and the connecting portion 221 is sealingly connected to the second case portion 212.

For example, an outermost periphery of the bottom guard plate 22 may protrude to form the connecting portion 221.

A specific manner for connecting the connecting portion 221 and the second case portion 212 is not limited herein. For example, the connecting portion 221 and the second case portion 212 are fastened by a bolt, a screw, a rivet, or the like.

In this embodiment, the connecting portion 221 is formed through protrusion, allowing the bottom guard plate 22 to be connected to the second case portion 212 while defining the second accommodating cavity 24 between the bottom guard plate 22 and the second case portion 212. Additionally, the connecting portion 221 is sealingly connected to the second case portion 212, which can prevent mud, water, or the like from entering the second accommodating cavity 24, thereby protecting the heat exchange assembly 30 within the second accommodating cavity 24.

In some embodiments, the case assembly 20 further includes a sealing member, where the sealing member is sealingly sandwiched between the connecting portion 221 and the second case portion 212 to implement a sealed connection between the connecting portion 221 and the second case portion 212.

For example, the sealing member is a sealing strip.

In this embodiment, the sealing member is disposed, and the sealing member is sealingly sandwiched between the connecting portion 221 and the second case portion 212, that is, the sealing member is configured to seal a gap between the connecting portion 221 and the second case portion 212, further preventing mud, water, or the like from entering the second accommodating cavity 24. This improves the sealing performance between the bottom guard plate 22 and the second case portion 212, and also reduces occurrence of liquid leakage from the heat exchange assembly 30.

In some embodiments, a width of the sealing member is 2 mm to 20 mm.

For example, the width may be 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or 20 mm.

In this embodiment, the width of the sealing member is set to be 2 mm to 20 mm, effectively improving the sealing performance between the bottom guard plate 22 and the second case portion 212 while reducing costs.

In some embodiments, referring again to FIGs. 4 and 7, part of the bottom guard plate 22 protrudes to form a limiting structure 222. The limiting structure 222 is configured to support the heat exchange assembly 30.

It should be noted that part of the bottom guard plate 22 protruding to form the limiting structure 222 may mean: a side of the bottom guard plate 22 facing away from the case body 21 is recessed, causing a side of the bottom guard plate 22 facing the case body 21 to protrude to form the limiting structure 222; or a side of the bottom guard plate 22 facing away from the case body 21 is not recessed, and a side of the bottom guard plate 22 facing the case body 21 is thickened to protrude to form the limiting structure 222.

The limiting structure 222 is configured to support the heat exchange assembly 30, improving the assembly stability of the heat exchange assembly 30, thereby improving reliability of the battery apparatus 100.

In this embodiment, referring again to FIGs. 4 and 7, the bottom guard plate 22 is provided with the limiting structure 222 to support the heat exchange assembly 30, improving stability of thermal interface contact of the heat exchange assembly 30, thereby enhancing the thermal management performance of the heat exchange assembly 30.

For example, in an embodiment that the limiting structure 222 is configured to support the flexible member 31, the limiting structure 222 may support a surface of the flexible member 31 and press the flexible member 31 against the second case portion 212.

In this embodiment, the limiting structure 222 is disposed to press the flexible member 31 against the second case portion 212, supporting the second case portion 212 while fixing the heat exchange assembly 30, thereby improving the stability of the heat exchange assembly 30.

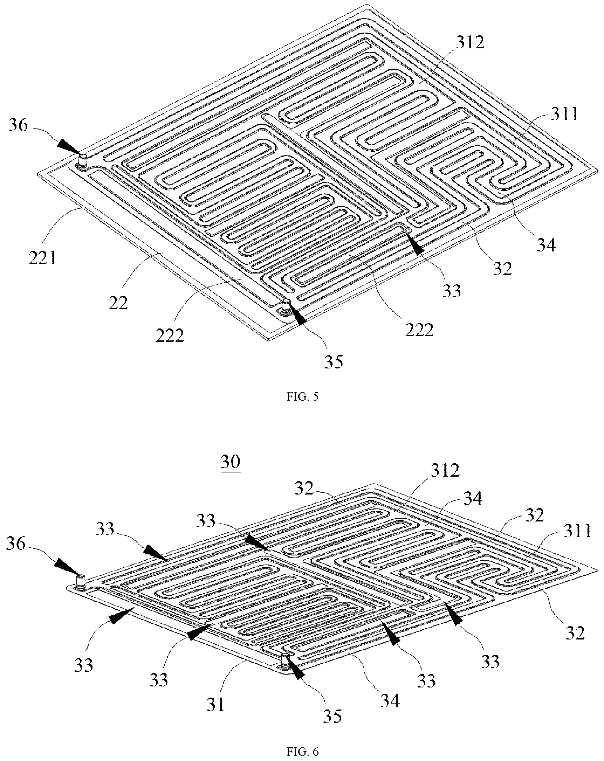

In some embodiments, referring again to FIG. 6, part of the bottom guard plate 22 protrudes to form a limiting structure 222, the heat exchange assembly 30 is provided with a clearance hole 33, and the limiting structure 222 runs through the clearance hole 33 to support the second case portion 212.

Herein, the heat exchange assembly 30 is provided with the clearance hole 33, that is, the flexible member 31 is provided with the clearance hole 33, and the clearance hole 33 extends through two opposite sides of the heat exchange assembly 30 in a thickness direction.

It should be noted that the clearance hole 33 needs to avoid the medium flow channel 32.

Herein, a specific position and a specific number of the clearance holes 33 are not limited and are determined based on specific circumstances.

In this embodiment, the heat exchange assembly 30 is provided with the clearance hole 33 to avoid the limiting structure 222, and the limiting structure 222 runs through the clearance hole 33 to abut against the second case portion 212, supporting the second case portion 212 while positioning the heat exchange assembly 30, thereby improving the stability of the heat exchange assembly 30.

In this embodiment, the bottom guard plate 22 is provided with the limiting structure 222, the heat exchange assembly 30 is provided with the clearance hole 33, and the limiting structure 222 runs through the clearance hole 33 to support the second case portion 212. This helps to mitigate deformation issues of the second case portion 212 caused by insufficient support strength under pressure, thereby preventing the second case portion 212 from directly contacting the heat exchange assembly 30 and causing the heat exchange assembly 30 to collapse. This helps to improve stability of thermal interface contact of the heat exchange assembly 30, thereby enhancing the thermal management performance of the heat exchange assembly 30.

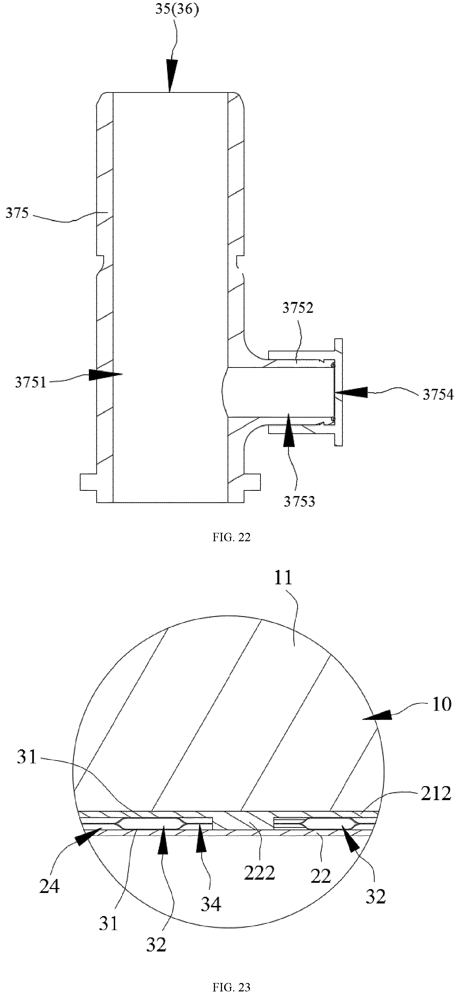

In some embodiments, referring to FIG. 23, part of the second case portion 212 protrudes to form a limiting structure 222. The limiting structure 222 is configured to support the heat exchange assembly 30.

It should be noted that part of the second case portion 212 protruding to form the limiting structure 222 may mean: a side of the second case portion 212 facing away from the bottom guard plate 22 is recessed, causing a side of the second case portion 212 facing the bottom guard plate 22 to protrude to form the limiting structure 222; or a side of the second case portion 212 facing away from the bottom guard plate 22 is not recessed, and a side of the second case portion 212 facing the bottom guard plate 22 is thickened to protrude to form the limiting structure 222.

In this embodiment, the second case portion 212 is provided with the limiting structure 222 to support the heat exchange assembly 30, improving stability of thermal interface contact of the heat exchange assembly 30, thereby enhancing the thermal management performance of the heat exchange assembly 30.

For example, in an embodiment that the limiting structure 222 is configured to support the flexible member 31, the limiting structure 222 may support a surface of the flexible member 31 and press the flexible member 31 against the bottom guard plate 22.

In this embodiment, the limiting structure 222 is disposed to press the flexible member 31 against the bottom guard plate 22, supporting the bottom guard plate 22 while fixing the heat exchange assembly 30, thereby improving the stability of the heat exchange assembly 30.

In some embodiments, part of the second case portion 212 protrudes to form a limiting structure 222, the heat exchange assembly 30 is provided with a clearance hole 33, and the limiting structure 222 runs through the clearance hole 33 to support the bottom guard plate 22.

Herein, the heat exchange assembly 30 is provided with the clearance hole 33, that is, the flexible member 31 is provided with the clearance hole 33.

It should be noted that the clearance hole 33 needs to avoid the medium flow channel 32.

Herein, a specific position and a specific number of the clearance holes 33 are not limited and are determined based on specific circumstances.

In this embodiment, the heat exchange assembly 30 is provided with the clearance hole 33 to avoid the limiting structure 222, and the limiting structure 222 runs through the clearance hole 33 to abut against the bottom guard plate 22, supporting the bottom guard plate 22 while positioning the heat exchange assembly 30, thereby improving the stability of the heat exchange assembly 30. This also allows the bottom guard plate 22 and the second case portion 212 to define the second accommodating cavity 24.

In this embodiment, the second case portion 212 is provided with the limiting structure 222, the heat exchange assembly 30 is provided with the clearance hole 33, and the limiting structure 222 runs through the clearance hole 33 to support the bottom guard plate 22. This helps to mitigate deformation issues of the second case portion 212 caused by insufficient support strength under pressure, thereby preventing the second case portion 212 from directly contacting the heat exchange assembly 30 and causing the heat exchange assembly 30 to collapse. This helps to improve stability of thermal interface contact of the heat exchange assembly 30, thereby enhancing the thermal management performance of the heat exchange assembly 30.

In some embodiments, a spacing between the clearance hole 33 and the limiting structure 222 is 0.5 mm to 1 mm.

For example, the spacing may be 0.5 mm, 0.6 mm, 0.7 mm, 0.8 mm, 0.9 mm, 1 mm, or the like.

The spacing between the clearance hole 33 and the limiting structure 222 is set to be 0.5 mm to 1 mm, allowing for positioning of the heat exchange assembly 30, and also improving efficiency of assembling the heat exchange assembly 30, the bottom guard plate 22, and the case body 21.

In some embodiments, the case assembly 20 further includes an adhesive layer, and the heat exchange assembly 30 is bonded to the second case portion 212 via the adhesive layer.

Herein, the adhesive layer may be formed by a double-sided tape or non-drying adhesive bonded between the heat exchange assembly 30 and the second case portion 212.

In this embodiment, the heat exchange assembly 30 is bonded to the second case portion 212 via the adhesive layer, improving the fit between the heat exchange surface of the heat exchange assembly 30 and the second case portion 212, thereby enhancing heat exchange efficiency and effect.

In some embodiments, a height of the limiting structure 222 is greater than or equal to a thickness of the heat exchange assembly 30.

That is, a dimension of the limiting structure 222 in a height direction of the battery apparatus 100 is greater than or equal to a dimension of the heat exchange assembly 30 in the height direction of the battery apparatus 100.

In this embodiment, the height of the limiting structure 222 is set to be greater than or equal to the thickness of the heat exchange assembly 30, allowing the bottom guard plate 22 and the second case portion 212 to be supported by the limiting structure 222, with the flexible heat exchange assembly 30 filling a gap between the bottom guard plate 22 and the second case portion 212. This helps to mitigate deformation issues of the second case portion 212 caused by insufficient support strength under pressure, thereby preventing the second case portion 212 from directly contacting the heat exchange assembly 30 and causing the heat exchange assembly 30 to collapse. This helps to improve stability of thermal interface contact of the heat exchange assembly 30, thereby enhancing the thermal management performance of the heat exchange assembly 30.

In some embodiments, referring to FIGs. 5 to 7, the limiting structure 222 is disposed in a central region of the second accommodating cavity 24.

Herein, the central region may be a position near a center of the bottom guard plate 22, spaced from an edge of the bottom guard plate 22; or may be a position near a center of the second case portion 212, spaced from an edge of the second case portion 212.

In this embodiment, the limiting structure 222 is disposed in the central region of the second accommodating cavity 24, improving support strength while improving structural strength of the bottom guard plate 22 and/or the second case portion 212.

In some embodiments, referring to FIGs. 5 and 6, the clearance hole 33 is provided in plurality, and the plurality of clearance holes 33 are symmetrically arranged with respective to a centerline of the heat exchange assembly 30.

Herein, the centerline of the heat exchange assembly 30 refers to a straight line passing through a midpoint of the heat exchange assembly 30 and extending along a length direction or a width direction of the heat exchange assembly 30.

In this embodiment, the plurality of clearance holes 33 are symmetrically arranged with respective to the centerline of the heat exchange assembly 30, so that the corresponding limiting structures 222 are also symmetrically arranged with respective to the centerline of the heat exchange assembly 30, further enhancing the structural strength of the heat exchange assembly 30.

In some embodiments, a length extension direction of the clearance hole 33 is consistent with an arrangement direction of a plurality of battery cells 11 in the battery cell assembly 10.

Herein, the plurality of battery cells 11 may be arranged along one direction to form the battery cell assembly 10.

In this embodiment, the arrangement direction of the plurality of battery cells 11 in the battery cell assembly 10 is a direction perpendicular to a large surface of the battery cell 11, that is, the battery cells 11 are in contact with or close to each other via their large surfaces. The arrangement direction of the plurality of battery cells 11 in the battery cell assembly 10 is also an extension direction of the medium flow channel 32.

The battery cell 11 includes a plurality of surfaces. A surface with the largest area among the plurality of surfaces is the large surface. Taking a square battery cell 11 as an example, in a vertical state, a surface formed by a length direction and a width direction of the battery cell 11 is a bottom surface of the battery cell 11, a surface formed by the length direction and a height direction of the battery cell 11 is the large surface of the battery cell 11, and a surface formed by the width direction and the height direction of the battery cell 11 is a side surface of the battery cell 11.

In this embodiment, the length extension direction of the clearance hole 33 is set consistent with the arrangement direction of the plurality of battery cells 11 in the battery cell assembly 10, enhancing structural strength while improving heat exchange efficiency.

In some embodiments, a gap between the clearance hole 33 and the limiting structure 222 in the length direction is greater than or equal to 0 and less than or equal to 5 mm.

The gap between the clearance hole 33 and the limiting structure 222 in the length direction may be 0.1 mm, 0.2 mm, 0.3 mm, 0.4 mm, 0.5 mm, 0.6 mm, 0.7 mm, 0.8 mm, 0.9 mm, 1 mm, 1.5 mm, 1.7 mm, 1.8 mm, 1.9 mm, 2 mm, 3 mm, 3.5 mm, 3.6 mm, 3.8 mm, 4 mm, 4.5 mm, 4.7 mm, 4.8 mm, or 5 mm, or any value between any two of these values.

An appropriate gap between the clearance hole 33 and the limiting structure 222 in the length direction facilitates assembly positioning of the heat exchange assembly 30 while meeting installation redundancy.

In some embodiments, the gap between the clearance hole 33 and the limiting structure 222 in the length direction is greater than or equal to 2 mm and less than or equal to 3 mm.

For example, the gap between the clearance hole 33 and the limiting structure 222 in the length direction may be 2 mm, 2.1 mm, 2.2 mm, 2.3 mm, 2.4 mm, 2.5 mm, 2.6 mm, 2.7 mm, 2.8 mm, 2.9 mm, or 3 mm, or any value between any two of these values.

This further facilitates assembly positioning of the heat exchange assembly 30 while meeting installation redundancy. In some embodiments, the limiting structure 222 may alternatively be bonded to the second case portion 212 via an adhesive layer.

Herein, the limiting structure 222 is bonded to the second case portion 212 via the adhesive layer, further improving the reliability of the connection structure between the limiting structure 222 and the second case portion 212.

In some embodiments, the at least two flexible members 31 are arranged as metal-plastic composite films.

The flexible member 31 is a single-layer or multi-layer film.

Herein, the metal-plastic composite film is a metal-plastic composite material, including a metal layer and a plastic layer.

In this embodiment, since the metal-plastic composite films have small thickness and light weight, and the medium flow channel 32 is formed between the at least two metal-plastic composite films, the heat exchange assembly 30 is not affected by the extrusion process and does not require a large thickness, thereby reducing the overall thickness and weight of the heat exchange assembly 30. Additionally, due to the insulating properties of the heat exchange assembly 30, the risk of insulation failure is reduced, and the risk of the heat exchange assembly 30 reacting with the heat exchange medium flowing inside is also reduced, further reducing the risk of corrosion and leakage of the heat exchange medium.

For example, the at least two flexible members 31 are arranged as aluminum-plastic films.

The aluminum-plastic film has high barrier performance, as well as good cold stamping formability, puncture resistance, electrolyte stability, and electrical insulation.

In some embodiments, the at least two flexible members 31 include a hot-pressed region 34. The hot-pressed region 34 is formed by hot pressing the at least two flexible members 31. The hot-pressed region 34 divides the heat exchange assembly 30 to form the at least one medium flow channel 32.

Herein, the flexible member 31 is sealed by a hot-pressing process. The hot-pressing process can effectively ensure good sealing performance and cracking resistance of the heat exchange assembly 30.

In this embodiment, the flexible member 31 is sealed by the hot-pressing process, that is, the hot-pressed region 34 is formed by hot pressing. The hot-pressed region 34 divides the heat exchange assembly 30 to form the at least one medium flow channel 32. Such forming manner is simple.

In some embodiments, referring to FIGs. 2 to 6, a width of the hot-pressed region 34 is 0.5 mm to 5 mm.

For example, the width is 0.5 mm, 0.6 mm, 0.7 mm, 0.8 mm, 0.9 mm, 1.0 mm, 1.1 mm, 1.3 mm, 1.5 mm, 1.6 mm, 1.8 mm, 2.0 mm, 2.5 mm, 3.0 mm, 3.3 mm, 3.5 mm, 3.6 mm, 3.7 mm, 3.8 mm, 4.0 mm, 4.2 mm, 4.5 mm, 4.6 mm, 4.8 mm, 4.9 mm, 5 mm, or the like.

It can be understood that in some cases, different medium flow channels 32 are separated by the hot-pressed region 34. Thus, a sufficiently wide hot-pressed region 34 can ensure the sealing performance of the medium flow channel 32, that is, ensuring the reliability of the medium flow channel 32.

In this embodiment, the width of the hot-pressed region 34 is set to be 0.5 mm to 5 mm, which helps to improve the reliability of the medium flow channel 32 of the flexible member 31 while increasing coverage of the medium flow channel 32, thereby improving the heat exchange efficiency of the heat exchange assembly 30.

In some embodiments, referring to FIGs. 2 to 6, the width of the hot-pressed region 34 is 2 mm to 3 mm.

For example, the width is 2.0 mm, 2.1 mm, 2.3 mm, 2.4 mm, 2.5 mm, 2.6 mm, 2.7 mm, 2.8 mm, 2.9 mm, 3.0 mm, or the like.

In this embodiment, the width of the hot-pressed region 34 is set to be 2 mm to 3 mm, which helps to improve the reliability of the medium flow channel 32 of the flexible member 31 while further increasing coverage of the medium flow channel 32, thereby further improving the heat exchange efficiency of the heat exchange assembly 30.

In some embodiments, referring to FIGs. 2 to 5, the at least two flexible members 31 include a hot-pressed region 34, the hot-pressed region 34 is formed by hot pressing the at least two flexible members 31, and the hot-pressed region 34 divides the heat exchange assembly 30 to form the at least one medium flow channel 32. The hot-pressed region 34 is provided with a clearance hole 33.

That is, in an embodiment that the clearance hole 33 is formed, the clearance hole 33 is disposed in the hot-pressed region 34.

The clearance hole 33 is disposed in the hot-pressed region 34 to avoid the limiting structure 222. The hot-pressed region 34 has relatively high structural strength, improving reliability of the connection structure between the flexible member 31 and the support member.

In some embodiments, referring to FIGs. 5 and 6, the case assembly 20 is provided with a limiting structure 222, the heat exchange assembly 30 has a raised region 311 and a recessed region 312, the medium flow channel 32 is formed within the raised region 311, the recessed region 312 is a region without the medium flow channel 32, and the limiting structure 222 abuts against the recessed region 312.

Herein, a dimension of the raised region 311 in a height direction of the battery apparatus 100 is greater than a dimension of the recessed region 312 in the height direction of the battery apparatus 100.

For example, the medium flow channel 32 is formed within the raised region 311, and an extension direction of the raised region 311 is the extension direction of the medium flow channel 32.

For example, the raised region 311 and the recessed region 312 are spaced apart to define the raised region 311 between adjacent recessed regions 312.

For example, the flexible members 31 in the raised region 311 are spaced apart to form the medium flow channel 32 between the flexible members 31.

For example, the flexible members 31 in the recessed region 312 are in close contact to define the raised region 311 between adjacent recessed regions 312.

In this embodiment, the case assembly 20 is provided with the limiting structure 222, the heat exchange assembly 30 has the raised region 311 and the recessed region 312, the medium flow channel 32 is formed within the raised region 311, the recessed region 312 is the region without the medium flow channel 32, and the limiting structure 222 abuts against the recessed region 312.

In this embodiment, the heat exchange assembly 30 is provided with the raised region 311 and the recessed region 312 to form the medium flow channel 32 within the raised region 311, and the limiting structure 222 of the case assembly 20 abuts against the recessed region 312, implementing assembly positioning of the heat exchange assembly 30.

In some embodiments, referring to FIGs. 2 to 6, the recessed region 312 of the flexible member 31 has a through clearance hole 33, and the limiting structure 222 is inserted into the clearance hole 33.

Herein, the recessed region 312 of the flexible member 31 is provided with the clearance hole 33, that is, the flexible member 31 is provided with the clearance hole 33. The provision of the clearance hole 33 does not affect the medium flow channel 32.

It should be noted that the clearance hole 33 needs to avoid the medium flow channel 32.

Herein, a specific position and a specific number of the clearance holes 33 are not limited and are determined based on specific circumstances.

For example, the clearance hole 33 is disposed to avoid the limiting structure 222, allowing the limiting structure 222 to run through the clearance hole 33. The limiting structure 222 is capable of implementing assembly positioning of the heat exchange assembly 30.

In this embodiment, the heat exchange assembly 30 is provided with the clearance hole 33 to avoid the limiting structure 222, and the limiting structure 222 runs through the clearance hole 33, implementing the positioning of the heat exchange assembly 30 and improving the stability of the heat exchange assembly 30.

Certainly, in some other embodiments, some limiting structures 222 may support the hot-pressed region 34 of the flexible member 31, while other limiting structures 222 run through the clearance hole 33, implementing the positioning of the heat exchange assembly 30 and improving the stability of the heat exchange assembly 30.

In some embodiments, part of the case assembly 20 forms the limiting structure 222, and the limiting structure 222 runs through the clearance hole 33 to abut against another part of the case assembly 20.

The limiting structure 222 runs through the clearance hole 33 to abut against another part of the case assembly 20, meaning that the limiting structure 222 is capable of supporting the another part of the case assembly 20 to form a gap within the case assembly 20, with the heat exchange assembly 30 filling the gap.

In this embodiment, the heat exchange assembly 30 is provided with the clearance hole 33 to avoid the limiting structure 222, and the limiting structure 222 runs through the clearance hole 33 to abut against another part of the case assembly 20, supporting the another part of the case assembly 20 while positioning the heat exchange assembly 30, thereby improving the stability of the heat exchange assembly 30.

In some embodiments, the case assembly 20 further includes an adhesive layer, and the limiting structure 222 is bonded to the another part of the case assembly 20 via the adhesive layer.

Herein, the adhesive layer is, for example, formed by a double-sided tape or non-drying adhesive bonded between the heat exchange assembly 30 and the another part of the case assembly 20.

In this embodiment, the heat exchange assembly 30 is bonded to the another part of the case assembly 20 via the adhesive layer, improving the fit between the heat exchange surface of the heat exchange assembly 30 and the another part of the case assembly 20, thereby enhancing heat exchange efficiency and effect.

In some embodiments, referring to FIGs. 2 to 7, the case assembly 20 includes a case body 21 and a bottom guard plate 22. The case body 21 includes a first case portion 211 and a second case portion 212. The first accommodating cavity 23 is formed between the first case portion 211 and the second case portion 212. The second accommodating cavity 24 is formed between the bottom guard plate 22 and the second case portion 212, and the heat exchange assembly 30 is disposed within the second accommodating cavity 24. The limiting structure 222 is formed on a side of the bottom guard plate 22 and/or the second case portion 212 close to the second accommodating cavity 24.

Herein, the limiting structure 222 may be formed on a side of the bottom guard plate 22 close to the second accommodating cavity 24, may be formed on a side of the second case portion 212 close to the second accommodating cavity 24, or may be formed on sides of both the bottom guard plate 22 and the second case portion 212 close to the second accommodating cavity 24.

Herein, the heat exchange assembly 30 may be disposed only within the second accommodating cavity 24, or the heat exchange assembly 30 may be disposed within the second accommodating cavity 24 and other regions outside the second accommodating cavity 24.

The second accommodating cavity 24 is formed between the bottom wall of the second case portion 212 and the bottom guard plate 22, meaning that the first accommodating cavity 23 is separated from the second accommodating cavity 24.

Herein, the bottom guard plate 22 is disposed, protecting the case assembly 20 and the battery cell 11 while supporting and protecting the heat exchange assembly 30.

The heat exchange assembly 30 is disposed within the second accommodating cavity 24, that is, the heat exchange assembly 30 is disposed outside the first accommodating cavity 23, to separate the heat exchange assembly 30 from the battery cell assembly 10. This prevents the heat exchange medium of the heat exchange assembly 30 from leaking and coming into contact with the battery cell assembly 10 to cause a short circuit of the battery apparatus 100, thereby improving the reliability of the battery apparatus 100.

In this embodiment, the bottom guard plate 22 is disposed outside the case body 21, so that the second accommodating cavity 24 is defined between the bottom guard plate 22 and the second case portion 212. The heat exchange assembly 30 is disposed within the second accommodating cavity 24 for heat exchange with the case body 21, thereby implementing heat exchange with the battery cell assembly 10 housed within the case body 21. In other words, the heat exchange assembly 30 is disposed outside the first accommodating cavity 23 of the case assembly 20, which can prevent short circuits of the battery apparatus 100 caused by leakage of the heat exchange medium from the heat exchange assembly 30 to some extent, improving the reliability of the battery apparatus 100. This can also increase the utilization rate of the internal accommodating cavity of the case assembly 20, thereby enhancing the compactness of the battery apparatus 100. Additionally, with arrangement of the bottom guard plate 22, the bottom guard plate 22 cooperates with the case body 21 to connect and protect the battery cell assembly 10, further improving the reliability of the case assembly 20.

In some embodiments, the heat exchange assembly 30 is disposed within the first accommodating cavity 23, and the limiting structure 222 is formed on a side of the first case portion 211 and/or the second case portion 212 close to the first accommodating cavity 23.

That is, the heat exchange assembly 30 is disposed within the first accommodating cavity 23 of the case assembly 20, and both the heat exchange assembly 30 and the battery cell assembly 10 are disposed within the first accommodating cavity 23. This allows for direct contact between the heat exchange assembly 30 and the battery cell assembly 10, improving heat exchange efficiency of the heat exchange assembly 30. The limiting structure 222 of the case assembly 20 abuts against the recessed region 312 of the heat exchange assembly 30 to implement assembly positioning of the heat exchange assembly 30.

In some embodiments, the flexible member 31 is a layered structure, the flexible member 31 includes a metal layer and a non-metal layer, and the metal layer and the non-metal layer are sequentially stacked.

Herein, the flexible member 31 includes the metal layer and the non-metal layer, that is, a composite material member composed of the metal layer and the non-metal layer.

For example, the metal layer and the non-metal layer may be formed by hot pressing or hot melting.

Herein, the numbers of metal layers and non-metal layers are not limited.

In this embodiment, the flexible members 31 with the sequentially stacked metal layer and non-metal layer have small thickness and light weight, and the medium flow channel 32 is formed between the at least two flexible members 31, so that the heat exchange assembly 30 is not affected by the extrusion process and does not require a large thickness, thereby reducing the overall thickness and weight of the heat exchange assembly 30. Additionally, the heat exchange assembly 30 does not react with the heat exchange medium flowing inside, so there is no risk of corrosion and leakage.

In some embodiments, the metal layer includes one or more of aluminum foil, copper foil, and steel foil.

The metal layer is designed to include one or more of aluminum foil, copper foil, and steel foil, allowing the flexible member 31 to have sufficient structural strength and provide isolation.

In some embodiments, the non-metal layer includes one or more of polypropylene, polyvinyl chloride, and polyethylene.

The non-metal layer is designed to include one or more of polypropylene, polyvinyl chloride, and polyethylene, allowing the flexible member 31 to have a waterproof effect.

For example, a non-metal layer made of a corrosion-resistant material with acid and alkali resistance may also be selected, or an additive may be added to the non-metal layer to provide acid and alkali resistance for the non-metal layer.

In some embodiments, the non-metal layer is a hot-melt layer.

Herein, the non-metal layer is arranged as a hot-melt layer, that is, made of a hot-melt material, facilitating composite formation of the non-metal layer and the metal layer through hot melting, resulting in simple forming and high production efficiency.

In some embodiments, the flexible member 31 is a layered structure, the flexible member 31 includes a corrosion-resistant layer, an isolation layer, and a waterproof layer arranged sequentially, and the waterproof layer is closer to the medium flow channel 32 than the corrosion-resistant layer.

Herein, the corrosion-resistant layer may be a nylon layer made of a nylon material, providing certain corrosion resistance performance, such as resistance to acid and alkali corrosion.

The isolation layer may be a metal layer, and the metal layer may be designed to include one or more of aluminum foil, copper foil, and steel foil, allowing the flexible member 31 to have sufficient structural strength and provide isolation.

The waterproof layer may be a non-metal layer, and the non-metal layer may be designed to include one or more of polypropylene, polyvinyl chloride, and polyethylene, allowing the flexible member 31 to have a waterproof effect.

In this embodiment, the flexible member 31 is designed to include the corrosion-resistant layer, the isolation layer, and the waterproof layer arranged sequentially, with the waterproof layer closer to the medium flow channel 32 than the corrosion-resistant layer, thereby improving the reliability of the heat exchange assembly 30.

In some embodiments, a thickness of the isolation layer is 6.5 μm to 100 μm.

The thickness of the isolation layer may be 6.5 μm, 10 μm, 15 μm, 20 μm, 25 μm, 30 μm, 35 μm, 38 μm, 40 μm, 45 μm, 50 μm, 55 μm, 60 μm, 65 μm, 70 μm, 75 μm, 80 μm, 85 μm, 90 μm, 92 μm, 95 μm, or 100 μm, or any value between any two of these values.

In this embodiment, the thickness of the isolation layer is set to be 6.5 μm to 100 μm, allowing the flexible member 31 to have sufficient structural strength and flexibility.

In some embodiments, the thickness of the isolation layer is 6.5 μm to 15 μm.

The thickness of the isolation layer may be 6.5 μm, 7 μm, 7.5 μm, 7.8 μm, 8 μm, 8.3 μm, 8.5 μm, 8.8 μm, 9 μm, 9.2 μm, 9.5 μm, 9.7 μm, 10 μm, 10.3 μm, 10.5 μm, 10.8 μm, 11 μm, 11.5 μm, 11.8 μm, 12 μm, 12.3 μm, 12.5 μm, 13 μm, 13.5 μm, 14 μm, 14.5 μm, or 15 μm, or any value between any two of these values.

In this embodiment, the thickness of the isolation layer is set to be 6.5 μm to 15 μm, further allowing the flexible member 31 to have sufficient structural strength and flexibility.

In some embodiments, a thickness of the corrosion-resistant layer is 5 μm to 20 μm.

The thickness of the corrosion-resistant layer may be 5 μm, 5.5 μm, 5.8 μm, 6 μm, 6.5 μm, 7 μm, 7.5 μm, 7.8 μm, 8 μm, 8.3 μm, 8.5 μm, 8.8 μm, 9 μm, 9.2 μm, 9.5 μm, 9.7 μm, 10 μm, 10.3 μm, 10.5 μm, 10.8 μm, 11 μm, 11.5 μm, 11.8 μm, 12 μm, 12.3 μm, 12.5 μm, 13 μm, 13.5 μm, 14 μm, 14.5 μm, 15 μm, 15.5 μm, 16 μm, 16.5 μm, 17 μm, 17.5 μm, 18 μm, 18.5 μm, 18.7 μm, 19 μm, 19.5 μm, or 20 μm, or any value between any two of these values.

In this embodiment, the thickness of the corrosion-resistant layer is set to be 5 μm to 20 μm, improving the wear resistance and toughness of the flexible member 31.

In some embodiments, a thickness of the waterproof layer is 50 μm to 120 μm.

The thickness of the waterproof layer may be 50 μm, 55 μm, 60 μm, 65 μm, 70 μm, 75 μm, 80 μm, 85 μm, 90 μm, 92 μm, 95 μm, 100 μm, 105 μm, 108 μm, 110 μm, 115 μm, or 120 μm, or any value between any two of these values.

In this embodiment, the thickness of the waterproof layer is set to be 50 μm to 120 μm, allowing sufficient structural strength for the waterproof layer to improve waterproof performance, and facilitating hot-pressing connection of the flexible member 31 through the waterproof layer.

In some embodiments, referring to FIGs. 2 to 5, a thickness of the flexible member 31 is 0.05 mm to 0.3 mm.

For example, the thickness may be 0.05 mm, 0.06 mm, 0.07 mm, 0.08 mm, 0.09 mm, 0.1 mm, 0.15 mm, 0.2 mm, 0.21 mm, 0.22 mm, 0.25 mm, 0.27 mm, 0.28 mm, 0.3 mm, or the like.

In this embodiment, the thickness of the flexible member 31 is set to be 0.05 mm to 0.3 mm, allowing sufficient structural strength for the heat exchange assembly 30 made of the flexible member 31 while maintaining a small overall thickness for the heat exchange assembly 30. This helps to reduce the overall volume and weight of the battery apparatus 100, thereby increasing the energy density of the battery apparatus 100.

In some embodiments, referring to FIGs. 2 to 5, the thickness of the flexible member 31 is 0.08 mm to 0.2 mm.

For example, the thickness is 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or the like.

In this embodiment, the thickness of the flexible member 31 is set to be 0.08 mm to 0.2 mm, allowing sufficient structural strength for the heat exchange assembly 30 made of the flexible member 31 while further maintaining a small overall thickness for the heat exchange assembly 30. This helps to further reduce the overall volume and weight of the battery apparatus 100, thereby further increasing the energy density of the battery apparatus 100.

In some embodiments, an elastic modulus of the flexible member 31 is 0.1 MPa to 10000 MPa.

For example, the elastic modulus of the flexible member 31 may be 0.1 MPa, 1 MPa, 50 MPa, 100 MPa, 150 MPa, 200 MPa, 300 MPa, 500 MPa, 800 MPa, 1000 MPa, 1300 MPa, 1500 MPa, 1800 MPa, 2000 MPa, 2500 MPa, 2800 MPa, 3000 MPa, 3500 MPa, 4000 MPa, 4500 MPa, 5000 MPa, 5500 MPa, 6000 MPa, 6500 MPa, 7000 MPa, 7500 MPa, 8000 MPa, 8500 MPa, 8800 MPa, 9000 MPa, 9500 MPa, 9700 MPa, or 10000 MPa, or any value between any two of these values.

The elastic modulus describes unit strain caused by unit stress when a solid is subjected to force within a specific range, and it is one of the fundamental physical quantities of a material. A larger elastic modulus indicates a greater stiffness and a stronger compressive strength of a material. The elastic modulus is a physical quantity describing the elasticity of a material.

In this embodiment, the elastic modulus of the flexible member 31 is set to be 0.1 MPa to 10000 MPa, allowing sufficient structural strength for the flexible member 31 to improve the reliability of the heat exchange assembly 30, as well as sufficient deformation capability to enhance the fit between the heat exchange assembly 30 and the case assembly 20 and/or the battery cell assembly 10 of the battery assembly. This increases the effective heat exchange area between the heat exchange assembly 30 and the case assembly 20 and/or the battery cell assembly 10 of the battery assembly, thereby improving the heat exchange efficiency and effect of the heat exchange assembly 30.

A second aspect of the embodiments of the present disclosure provides a heat exchange assembly 30. The heat exchange assembly 30 includes at least two flexible members 31. The at least two flexible members 31 are stacked, and at least one medium flow channel 32 is formed between the flexible members 31, where the at least one medium flow channel 32 is configured to circulate a heat exchange medium, and the heat exchange medium is configured to exchange heat with a heat exchange unit 372 assembly.

The heat exchange assembly 30 including at least two flexible members 31 means that the number of flexible members 31 included in the heat exchange assembly 30 may be two or more than two.

Herein, "flexible" in the flexible member 31 refers to a material property of the structure. This type of property may be imparted by the lightweight nature of the material, or may be imparted by at least any one nature of the material such as thickness, stiffness, strength, or elastic modulus. In an example, a material of the flexible member 31 may be a material lighter than conventional structures such as aluminum plates or steel plates, and its flexibility can be controlled by the thickness, width, length, and material type of the flexible member 31. In the embodiments of the present disclosure, the heat exchange assembly 30 is configured in the form of flexible members 31, reducing the weight of the heat exchange assembly 30.

The at least one medium flow channel 32 being formed between the at least two flexible members 31 means that the heat exchange assembly 30 has the medium flow channel 32 formed between the flexible members 31. The heat exchange medium flows through the medium flow channel 32 to exchange heat with the battery cell assembly 10.

It should be noted that the heat exchange medium is not limited to a specific type herein, as long as it can provide a cooling effect for the battery cell 11, such as being gaseous or liquid. In the embodiments of the present disclosure, the heat exchange medium being water is used as an example for illustration.

For example, the heat exchange assembly 30 further includes an inlet 35 and an outlet 36, where both the inlet 35 and the outlet 36 are in communication with the medium flow channel 32.

Herein, the inlet 35 and the outlet 36 of the heat exchange assembly 30 are configured to be connected to pipelines of a liquid storage device, such as an air conditioning system or a water tank, of a vehicle or an electric device.

It should be noted that a specific number of the medium flow channels 32 is not limited herein. One or more medium flow channels 32 may be provided.

A principle of the heat exchange assembly 30 exchanging heat with the battery cell assembly 10 is as follows: A heat exchange medium output from a heat exchange source (not shown in the figure) enters the medium flow channel via the inlet 35 of the heat exchange assembly 30. After the heat exchange medium exchanges heat with the battery cell assembly 10, the heat exchange medium flows out via the outlet 36 of the heat exchange assembly 30, completing the heat exchange with the battery cell assembly 10.

The flexible members 31 are arranged as a flexible structure with a certain expandability or contractibility. Therefore, the heat exchange assembly 30 can be formed as a conformal structure, enhancing the fit between the heat exchange assembly 30 and the case assembly 20 and/or the battery cell assembly 10, thereby increasing the effective heat exchange area between the heat exchange assembly 30 and the case assembly 20 and/or the battery cell assembly 10.

It should be noted that the flexible member 31 may have conductive performance, facilitating equipotential settings with the case assembly 20. The flexible member 31 may also have electrical insulation properties, with no need for insulation treatment, thereby reducing the risk of electrical leakage and production costs of the battery apparatus 100, and improving the reliability of the battery apparatus 100.

According to the heat exchange assembly 30 provided in the embodiments of the present disclosure, on one hand, the heat exchange assembly 30 is made of flexible members 31. The flexible members 31 are light in weight, contributing to reducing the weight of the heat exchange assembly 30 and lowering production costs of the heat exchange assembly 30. On the other hand, the flexible members 31 are arranged as a flexible structure, allowing the heat exchange assembly 30 to better fit to the case assembly 20 and/or the battery cell assembly 10. This facilitates absorption of assembly tolerances of the heat exchange assembly 30, enhances the fit between the heat exchange assembly 30 and the case assembly 20 and/or the battery cell assembly 10 without needing to use sealants or thermally conductive materials, and increases the effective heat exchange area between the heat exchange assembly 30 and the case assembly 20 and/or the battery cell assembly 10, thereby improving the heat exchange efficiency and effect of the heat exchange assembly 30.

In some embodiments, referring to FIGs. 2 to 6, the heat exchange assembly 30 is provided with a clearance hole 33, where the clearance hole 33 extends through two opposite sides of the heat exchange assembly 30.

Herein, the heat exchange assembly 30 is provided with the clearance hole 33, that is, the flexible member 31 is provided with the clearance hole 33.

It should be noted that the clearance hole 33 needs to avoid the medium flow channel 32.

Herein, a specific position and a specific number of the clearance holes 33 are not limited and are determined based on specific circumstances.

In this embodiment, the heat exchange assembly 30 is provided with the clearance hole 33 to avoid a limiting structure 222, facilitating positioning of the heat exchange assembly 30 and improving the stability of the heat exchange assembly 30.

In some embodiments, referring to FIGs. 2 to 7, the clearance hole 33 is provided in plurality, and the plurality of clearance holes 33 are symmetrically arranged with respective to a centerline of the heat exchange assembly 30.

Herein, the centerline of the heat exchange assembly 30 refers to a straight line passing through a midpoint of the heat exchange assembly 30 and extending along a length direction or a width direction of the heat exchange assembly 30.

In this embodiment, the plurality of clearance holes 33 are symmetrically arranged with respective to the centerline of the heat exchange assembly 30, so that the corresponding limiting structures 222 are also symmetrically arranged with respective to the centerline of the heat exchange assembly 30, further enhancing the structural strength of the heat exchange assembly 30.

In some embodiments, referring to FIGs. 2 to 6, the at least two flexible members 31 include a hot-pressed region 34, the hot-pressed region 34 is formed by hot pressing the at least two flexible members 31, and the hot-pressed region 34 divides the heat exchange assembly 30 to form the at least one medium flow channel 32.

Herein, the flexible member 31 is sealed by a hot-pressing process. The hot-pressing process can effectively ensure good sealing performance and cracking resistance of the heat exchange assembly 30.

In this embodiment, the flexible member 31 is sealed by the hot-pressing process, that is, the hot-pressed region 34 is formed by hot pressing. The hot-pressed region 34 divides the heat exchange assembly 30 to form the at least one medium flow channel 32. Such forming manner is simple.

In some embodiments, a width of the hot-pressed region 34 is 0.5 mm to 5 mm.

For example, the width is 0.5 mm, 0.6 mm, 0.7 mm, 0.8 mm, 0.9 mm, 1.0 mm, 1.1 mm, 1.3 mm, 1.5 mm, 1.6 mm, 1.8 mm, 2.0 mm, 2.5 mm, 3.0 mm, 3.3 mm, 3.5 mm, 3.6 mm, 3.7 mm, 3.8 mm, 4.0 mm, 4.2 mm, 4.5 mm, 4.6 mm, 4.8 mm, 4.9 mm, or 5 mm, or any value between any two of these values.

It can be understood that in some cases, different medium flow channels 32 are separated by the hot-pressed region 34. Thus, a sufficiently wide hot-pressed region 34 can ensure the sealing performance of the medium flow channel 32, that is, ensuring the reliability of the medium flow channel 32.

In this embodiment, the width of the hot-pressed region 34 is set to be 0.5 mm to 5 mm, which helps to improve the reliability of the medium flow channel 32 of the flexible member 31 while increasing coverage of the medium flow channel 32, thereby improving the heat exchange efficiency of the heat exchange assembly 30.

In some embodiments, the width of the hot-pressed region 34 is 2 mm to 3 mm.

For example, the width is 2.0 mm, 2.1 mm, 2.3 mm, 2.4 mm, 2.5 mm, 2.6 mm, 2.7 mm, 2.8 mm, 2.9 mm, or 3.0 mm, or any value between any two of these values.

In this embodiment, the width of the hot-pressed region 34 is set to be 2 mm to 3 mm, which helps to improve the reliability of the medium flow channel 32 of the flexible member 31 while further increasing coverage of the medium flow channel 32, thereby further improving the heat exchange efficiency of the heat exchange assembly 30.

In some embodiments, referring to FIGs. 5 to 6, the hot-pressed region 34 is provided with a clearance hole 33.

That is, in an embodiment that the clearance hole 33 is formed, the clearance hole 33 is disposed in the hot-pressed region 34.

The clearance hole 33 is disposed in the hot-pressed region 34 to avoid the limiting structure 222. The hot-pressed region 34 has relatively high structural strength, improving reliability of the connection structure between the flexible member 31 and the support member.

In some embodiments, referring to FIGs. 5 and 6, the heat exchange assembly 30 has a raised region 311 and a recessed region 312, where the medium flow channel 32 is formed within the raised region 311, the recessed region 312 is a region without the medium flow channel 32, and the flexible member 31 is hot-pressed in the recessed region 312.

Herein, a dimension of the raised region 311 in a height direction of the battery apparatus 100 is greater than a dimension of the recessed region 312 in the height direction of the battery apparatus 100.

For example, the medium flow channel 32 is formed within the raised region 311, and an extension direction of the raised region 311 is the extension direction of the medium flow channel 32.

For example, the raised region 311 and the recessed region 312 are spaced apart to define the raised region 311 between adjacent recessed regions 312.

For example, the flexible members 31 in the raised region 311 are spaced apart to form the medium flow channel 32 between the flexible members 31.

For example, the flexible members 31 in the recessed region 312 are in close contact to define the raised region 311 between adjacent recessed regions 312.

In this embodiment, the case assembly 20 is provided with the limiting structure 222, the heat exchange assembly 30 has the raised region 311 and the recessed region 312, the medium flow channel 32 is formed within the raised region 311, the recessed region 312 is the region without the medium flow channel 32, and the limiting structure 222 abuts against the recessed region 312.

In this embodiment, the heat exchange assembly 30 is provided with the raised region 311 and the recessed region 312 to form the medium flow channel 32 within the raised region 311, and the limiting structure 222 of the case assembly 20 abuts against the recessed region 312, implementing assembly positioning of the heat exchange assembly 30.

In some embodiments, referring to FIGs. 4 to 6, the recessed region 312 is provided with a through clearance hole 33.

Herein, the recessed region 312 of the flexible member 31 is provided with the clearance hole 33, that is, the flexible member 31 is provided with the clearance hole 33. The provision of the clearance hole 33 does not affect the medium flow channel 32.

It should be noted that the clearance hole 33 needs to avoid the medium flow channel 32.

Herein, a specific position and a specific number of the clearance holes 33 are not limited and are determined based on specific circumstances.

For example, the clearance hole 33 is disposed to avoid the limiting structure 222, allowing the limiting structure 222 to run through the clearance hole 33. The limiting structure 222 is capable of implementing assembly positioning of the heat exchange assembly 30.

In this embodiment, the heat exchange assembly 30 is provided with the clearance hole 33 to avoid the limiting structure 222, and the limiting structure 222 runs through the clearance hole 33, implementing the positioning of the heat exchange assembly 30 and improving the stability of the heat exchange assembly 30.

In some embodiments, the at least two flexible members 31 are arranged as metal-plastic composite films.

The flexible member 31 is a single-layer or multi-layer film.

Herein, the metal-plastic composite film is a metal-plastic composite material, including a metal layer and a plastic layer.

In this embodiment, since the metal-plastic composite films have small thickness and light weight, and the medium flow channel 32 is formed between the at least two metal-plastic composite films, the heat exchange assembly 30 is not affected by the extrusion process and does not require a large thickness, thereby reducing the overall thickness and weight of the heat exchange assembly 30. Additionally, due to the insulating properties of the metal-plastic composite film, the risk of insulation failure is avoided. The heat exchange assembly 30 does not react with the internally flowing heat exchange medium, so there is no risk of corrosion and leakage.

For example, the at least two flexible members 31 are arranged as aluminum-plastic films.

The aluminum-plastic film has high barrier performance, as well as good cold stamping formability, puncture resistance, electrolyte stability, and electrical insulation.

In some embodiments, the flexible member 31 is a layered structure, the flexible member 31 includes a metal layer and a non-metal layer, and the metal layer and the non-metal layer are sequentially stacked.

Herein, the flexible member 31 includes the metal layer and the non-metal layer, that is, a composite material member composed of the metal layer and the non-metal layer.

For example, the metal layer and the non-metal layer may be formed by hot pressing or hot melting.

Herein, the numbers of metal layers and non-metal layers are not limited.

In this embodiment, the flexible members 31 with the sequentially stacked metal layer and non-metal layer have small thickness and light weight, and the medium flow channel 32 is formed between the at least two flexible members 31, so that the heat exchange assembly 30 is not affected by the extrusion process and does not require a large thickness, thereby reducing the overall thickness and weight of the heat exchange assembly 30. Additionally, the heat exchange assembly 30 does not react with the heat exchange medium flowing inside, so there is no risk of corrosion and leakage.

In some embodiments, the metal layer includes one or more of aluminum foil, copper foil, and steel foil.

The metal layer is designed to include one or more of aluminum foil, copper foil, and steel foil, allowing the flexible member 31 to have sufficient structural strength and provide isolation.

In some embodiments, the non-metal layer includes one or more of polypropylene, polyvinyl chloride, and polyethylene.

The non-metal layer is designed to include one or more of polypropylene, polyvinyl chloride, and polyethylene, allowing the flexible member 31 to have a waterproof effect.

For example, a non-metal layer made of a corrosion-resistant material with acid and alkali resistance may also be selected, or an additive may be added to the non-metal layer to provide acid and alkali resistance for the non-metal layer.

In some embodiments, the non-metal layer is a hot-melt layer.

Herein, the non-metal layer is arranged as a hot-melt layer, that is, made of a hot-melt material, facilitating composite formation of the non-metal layer and the metal layer through hot melting, resulting in simple forming and high production efficiency.

In some embodiments, the flexible member 31 is a layered structure, the flexible member 31 includes a corrosion-resistant layer, an isolation layer, and a waterproof layer arranged sequentially, and the waterproof layer is closer to the medium flow channel 32 than the corrosion-resistant layer.

Herein, the corrosion-resistant layer may be a nylon layer made of a nylon material, providing certain corrosion resistance performance, such as resistance to acid and alkali corrosion.

The isolation layer may be a metal layer, and the metal layer may be designed to include one or more of aluminum foil, copper foil, and steel foil, allowing the flexible member 31 to have sufficient structural strength and provide isolation.

The waterproof layer may be a non-metal layer, and the non-metal layer may be designed to include one or more of polypropylene, polyvinyl chloride, and polyethylene, allowing the flexible member 31 to have a waterproof effect.

In this embodiment, the flexible member 31 is designed to include the corrosion-resistant layer, the isolation layer, and the waterproof layer arranged sequentially, with the waterproof layer closer to the medium flow channel 32 than the corrosion-resistant layer, thereby improving the reliability of the heat exchange assembly 30.

In some embodiments, a thickness of the isolation layer is 6.5 $\mu$m to 100 $\mu$m.

The thickness of the isolation layer may be 6.5 $\mu$m, 10 $\mu$m, 15 $\mu$m, 20 $\mu$m, 25 $\mu$m, 30 $\mu$m, 35 $\mu$m, 38 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 92 $\mu$m, 95 $\mu$m, or 100 $\mu$m, or any value between any two of these values.

In this embodiment, the thickness of the isolation layer is set to be 6.5 $\mu$m to 100 $\mu$m, allowing the flexible member 31 to have sufficient structural strength and flexibility.

In some embodiments, the thickness of the isolation layer is 6.5 $\mu$m to 15 $\mu$m.

The thickness of the isolation layer may be 6.5 $\mu$m, 7 $\mu$m, 7.5 $\mu$m, 7.8 $\mu$m, 8 $\mu$m, 8.3 $\mu$m, 8.5 $\mu$m, 8.8 $\mu$m, 9 $\mu$m, 9.2 $\mu$m, 9.5 $\mu$m, 9.7 $\mu$m, 10 $\mu$m, 10.3 $\mu$m, 10.5 $\mu$m, 10.8 $\mu$m, 11 $\mu$m, 11.5 $\mu$m, 11.8 $\mu$m, 12 $\mu$m, 12.3 $\mu$m, 12.5 $\mu$m, 13 $\mu$m, 13.5 $\mu$m, 14 $\mu$m, 14.5 $\mu$m, or 15 $\mu$m, or any value between any two of these values.

In this embodiment, the thickness of the isolation layer is set to be 6.5 $\mu$m to 15 $\mu$m, further allowing the flexible member 31 to have sufficient structural strength and flexibility.

In some embodiments, a thickness of the corrosion-resistant layer is 5 $\mu$m to 20 $\mu$m.

The thickness of the corrosion-resistant layer may be 5 $\mu$m, 5.5 $\mu$m, 5.8 $\mu$m, 6 $\mu$m, 6.5 $\mu$m, 7 $\mu$m, 7.5 $\mu$m, 7.8 $\mu$m, 8 $\mu$m, 8.3 $\mu$m, 8.5 $\mu$m, 8.8 $\mu$m, 9 $\mu$m, 9.2 $\mu$m, 9.5 $\mu$m, 9.7 $\mu$m, 10 $\mu$m, 10.3 $\mu$m, 10.5 $\mu$m, 10.8 $\mu$m, 11 $\mu$m, 11.5 $\mu$m, 11.8 $\mu$m, 12 $\mu$m, 12.3 $\mu$m, 12.5 $\mu$m, 13 $\mu$m, 13.5 $\mu$m, 14 $\mu$m, 14.5 $\mu$m, 15 $\mu$m, 15.5 $\mu$m, 16 $\mu$m, 16.5 $\mu$m, 17 $\mu$m, 17.5 $\mu$m, 18 $\mu$m, 18.5 $\mu$m, 18.7 $\mu$m, 19 $\mu$m, 19.5 $\mu$m, or 20 $\mu$m, or any value between any two of these values.

In this embodiment, the thickness of the corrosion-resistant layer is set to be 5 $\mu$m to 20 $\mu$m, improving the wear resistance and toughness of the flexible member 31.

In some embodiments, a thickness of the waterproof layer is 50 $\mu$m to 120 $\mu$m.

The thickness of the waterproof layer may be 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 92 $\mu$m, 95 $\mu$m, 100 $\mu$m, 105 $\mu$m, 108 $\mu$m, 110 $\mu$m, 115 $\mu$m, or 120 $\mu$m, or any value between any two of these values.

In this embodiment, the thickness of the waterproof layer is set to be 50 $\mu$m to 120 $\mu$m, allowing sufficient structural strength for the waterproof layer to improve waterproof performance, and facilitating hot-pressing connection of the flexible member 31 through the waterproof layer.

In some embodiments, a thickness of the flexible member 31 is 0.05 mm to 0.3 mm.

For example, the thickness may be 0.05 mm, 0.06 mm, 0.07 mm, 0.08 mm, 0.09 mm, 0.1 mm, 0.15 mm, 0.2 mm, 0.21 mm, 0.22 mm, 0.25 mm, 0.27 mm, 0.28 mm, 0.3 mm, or the like.

In this embodiment, the thickness of the flexible member 31 is set to be 0.05 mm to 0.3 mm, allowing sufficient structural strength for the heat exchange assembly 30 made of the flexible member 31 while maintaining a small overall thickness for the heat exchange assembly 30. This helps to reduce the overall volume and weight of the battery apparatus 100, thereby increasing the energy density of the battery apparatus 100.

In some embodiments, the thickness of the flexible member 31 is 0.08 mm to 0.2 mm.

For example, the thickness is 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or the like.

In this embodiment, the thickness of the flexible member 31 is set to be 0.08 mm to 0.2 mm, allowing sufficient structural strength for the heat exchange assembly 30 made of the flexible member 31 while further maintaining a small overall thickness for the heat exchange assembly 30. This helps to further reduce the overall volume and weight of the battery apparatus 100, thereby further increasing the energy density of the battery apparatus 100.

In some embodiments, an elastic modulus of the flexible member 31 is 0.1 MPa to 10000 MPa.

For example, the elastic modulus of the flexible member 31 may be 0.1 MPa, 1 MPa, 50 MPa, 100 MPa, 150 MPa, 200 MPa, 300 MPa, 500 MPa, 800 MPa, 1000 MPa, 1300 MPa, 1500 MPa, 1800 MPa, 2000 MPa, 2500 MPa, 2800 MPa, 3000 MPa, 3500 MPa, 4000 MPa, 4500 MPa, 5000 MPa, 5500 MPa, 6000 MPa, 6500 MPa, 7000 MPa, 7500 MPa, 8000 MPa, 8500 MPa, 8800 MPa, 9000 MPa, 9500 MPa, 9700 MPa, or 10000 MPa, or any value between any two of these values.

The elastic modulus describes unit strain caused by unit stress when a solid is subjected to force within a specific range, and it is one of the fundamental physical quantities of a material. A larger elastic modulus indicates a greater stiffness and a stronger compressive strength of a material. The elastic modulus is a physical quantity describing the elasticity of a material.

In this embodiment, the elastic modulus of the flexible member 31 is set to be 0.1 MPa to 10000 MPa, allowing sufficient structural strength for the flexible member 31 to improve the reliability of the heat exchange assembly 30, as well as sufficient deformation capability to enhance the fit between the heat exchange assembly 30 and the case assembly 20 and/or the battery cell assembly 10 of the battery assembly. This increases the effective heat exchange area between the heat exchange assembly 30 and the case assembly 20 and/or the battery cell assembly 10 of the battery assembly, thereby improving the heat exchange efficiency and effect of the heat exchange assembly 30.

In some embodiments, referring to FIGs. 4 and 8, the heat exchange assembly 30 includes a heat exchange layer 37 and a temperature equalization layer 38, where the heat exchange layer 37 includes the flexible member 31, and the temperature equalization layer 38 is disposed between the heat exchange layer 37 and the battery cell assembly 10.

The heat exchange layer 37 includes the flexible member 31, which can enhance the fit between the heat exchange layer 37 and the case assembly 20 and/or the battery cell assembly 10, and increase the effective heat exchange area between the heat exchange layer 37 and the case assembly 20 and/or the battery cell assembly 10, thereby improving the heat exchange efficiency and effect of the heat exchange layer 37.

The temperature equalization layer 38 is disposed between the heat exchange layer 37 and the battery cell assembly 10, meaning that the temperature equalization layer 38 is disposed on a side of the at least two flexible members 31 close to the battery cell assembly 10. Thus, the heat exchange medium within the medium flow channel 32 formed between the two flexible members 31 first exchanges heat with the temperature equalization layer 38, and the temperature equalization layer 38 balances the heat before exchanging heat with the battery apparatus 100, thereby adjusting temperature differences across different regions of the battery apparatus 100 to some extent.

Herein, the temperature equalization layer 38 may or may not be in direct contact with the battery cell assembly 10.

It can be understood that during the flow process, the heat exchange medium within the medium flow channel 32 continuously exchanges heat with the battery cell assembly 10. That is, the heat exchange medium absorbs heat from the battery cell assembly 10 to dissipate heat, causing the temperature of the heat exchange medium to gradually increase. As a result, along a flowing direction of the heat exchange medium, the heat exchange medium has a temperature in the upstream lower than that in the downstream, resulting in poorer heat dissipation performance of the heat exchange medium downstream for the battery cell assembly 10, thereby leading to poor temperature uniformity of the battery apparatus 100.

The temperature equalization layer 38 is disposed between the heat exchange layer 37 and the battery cell assembly 10, so that the heat exchange medium within the medium flow channel 32 can first exchange heat with the temperature equalization layer 38, meaning that the temperature equalization layer 38 can at least balance the temperatures upstream and downstream of the medium flow channel 32, making the temperatures of the temperature equalization layer 38 relatively uniform. Then heat exchange with the battery cell assembly 10 is implemented, improving the thermal management performance and temperature uniformity of the battery apparatus 100.

In some embodiments, referring to FIG. 8, the temperature equalization layer 38 includes a plurality of temperature equalization members 381, and a thermal resistance of at least one temperature equalization member 381 is different from a thermal resistance of any other temperature equalization member 381.

The thermal resistance of at least one temperature equalization member 381 being different from the thermal resistance of any other temperature equalization member 381 means that not all temperature equalization members 381 have the same thermal resistance. That is, the thermal resistances of the temperature equalization members 381 corresponding to different regions of the battery apparatus 100 can be adjusted according to the heat dissipation or heating requirements of those regions.

It should be noted that thermal resistance and thermal conductivity are two indicators used to measure the thermal performance of building materials or assembly materials. Thermal resistance represents a capability of a material to prevent heat to pass through. A higher R-value indicates better heat blocking and heat insulation performance.

$$\theta = L / (\lambda S);$$

where: $\theta$ is a thermal resistance; $\lambda$ is a thermal conductivity; L is a material thickness or length; S is a heat transfer area.

The ability of an object to resist heat conduction is proportional to the length of the conduction path, inversely proportional to the cross-sectional area through which the heat passes, and inversely proportional to the thermal conductivity of the material. That is, the thermal resistance of the temperature equalization layer 38 can be adjusted by controlling different materials and their thicknesses.

In this embodiment, the temperature equalization layer 38 is designed to include a plurality of temperature equalization members 381, with at least one temperature equalization member 381 having a different thermal resistance from other temperature equalization members 381. In this way, the temperature equalization layer 38 with different thermal resistances can be used in different regions of the battery cell assembly 10 as needed, that is, implementing zone-based thermal management of the heat exchange assembly 30, further improving the thermal management performance and temperature uniformity of the battery apparatus 100.

In some embodiments, referring to FIG. 8, the battery cell assembly 10 includes a first temperature zone and a second temperature zone, where a temperature of the first temperature zone is higher than a temperature of the second temperature zone, and a thermal resistance of the temperature equalization member 381 corresponding to the first temperature zone is lower than a thermal resistance of the temperature equalization member 381 corresponding to the second temperature zone.

It can be understood that during use of the battery apparatus 100, temperatures in different regions vary. For example, a temperature near a central region of the battery cell assembly 10 is higher and less likely to dissipate heat to surrounding areas, generally higher than a temperature at an edge of the battery apparatus 100.

For example, the first temperature zone is a high-temperature zone, and the second temperature zone is a low-temperature zone, where a temperature of the first temperature zone is higher than a temperature of the second temperature zone.

It should be noted that the first temperature zone and the second temperature zone in the embodiments of the present disclosure are absolute numerical ranges, and the present disclosure does not specifically limit these numerical ranges. These numerical ranges can be set based on a specific type of the battery apparatus 100, for example, through simulation analysis.

In this embodiment, the battery apparatus 100 is divided into different temperature zones, with different temperature zones corresponding to temperature equalization members 381 having different thermal resistances. Specifically, the thermal resistance of the temperature equalization member 381 corresponding to the high-temperature zone is set to be lower than the thermal resistance of the temperature equalization member 381 corresponding to the low-temperature zone, to implement zone-based thermal management of the battery apparatus 100. This facilitates more effective heat exchange in the high-temperature zone, meaning that the low-thermal-resistance temperature equalization member 381 is more conducive to heat dissipation in the high-temperature zone of the battery apparatus 100, thereby making the temperatures of the battery apparatus 100 more uniform, and further improving the thermal management performance and temperature uniformity of the battery apparatus 100.

In some embodiments, referring again to FIG. 8, a thermal resistance of the temperature equalization member 381 corresponding to an upstream region of the medium flow channel 32 is higher than a thermal resistance of the temperature equalization member 381 corresponding to a downstream region of the medium flow channel 32.

It can be understood that since a temperature of the heat exchange medium upstream of the medium flow channel 32 is lower than a temperature of the heat exchange medium downstream, the heat exchange medium downstream has a reduced heat dissipation effect on the battery cell assembly 10, leading to poor temperature uniformity of the battery apparatus 100.

In this embodiment, the thermal resistance of the temperature equalization member 381 corresponding to the upstream region of the medium flow channel 32 is set to be higher than the thermal resistance of the temperature equalization member 381 corresponding to the downstream region of the medium flow channel 32, to implement zone-based thermal management of the battery apparatus 100. This facilitates more effective heat exchange in the downstream region of the medium flow channel 32, meaning that the low-thermal-resistance-temperature equalization member 381 corresponding to the downstream region has higher heat exchange efficiency with the heat exchange medium, thereby making the temperatures of the battery apparatus 100 more uniform, and further improving the thermal management performance and temperature uniformity of the battery apparatus 100.

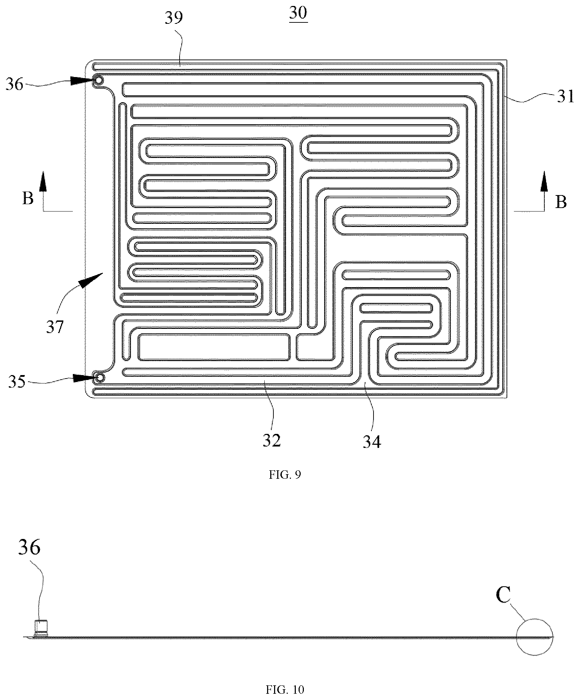

In some embodiments, referring to FIG. 9, the heat exchange assembly 30 further includes a thermal insulation layer 39, where the thermal insulation layer 39 is disposed on a peripheral side of the heat exchange layer 37.

Herein, the thermal insulation layer 39 being disposed on the peripheral side of the heat exchange layer 37 means that a thermal insulation layer 39 is formed around the peripheral side of the heat exchange layer 37 or thermal insulation layer 39 is formed on a partial region of the peripheral side of the heat exchange layer 37.

It should be noted that the thermal insulation layer 39 and the heat exchange layer 37 may be an integrally formed structure, that is, the thermal insulation layer 39 and the heat exchange layer 37 are made of a same material. For example, the thermal insulation layer 39 is a thermal insulation cavity 391 formed on the peripheral side of the heat exchange layer 37. Alternatively, the thermal insulation layer 39 and the heat exchange layer 37 may be a split structure, that is, the thermal insulation layer 39 and the heat exchange layer 37 may be made of different materials. For example, the thermal conductivity of the thermal insulation layer 39 may be set to be lower than the thermal conductivity of the heat exchange layer 37.

In this embodiment, the thermal insulation layer 39 is disposed on the peripheral side of the heat exchange layer 37, mitigating heat loss from the battery apparatus 100 through the heat exchange layer 37 to the peripheral side, thereby improving the thermal insulation effect for the battery apparatus 100.

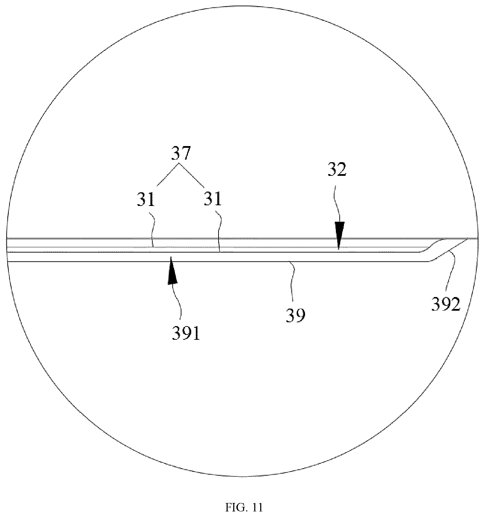

In some embodiments, referring to FIGs. 10 and 11, the heat exchange assembly 30 further includes a thermal insulation layer 39, where the thermal insulation layer 39 is disposed on a side of the heat exchange layer 37 facing away from the battery cell assembly 10.

That is, the heat exchange layer 37 is located between the battery cell assembly 10 and the thermal insulation layer 39.

For example, taking the heat exchange layer 37 being disposed at a bottom of the battery cell assembly 10 as an example, the thermal insulation layer 39 is located at a bottom of the heat exchange layer 37, increasing coverage area of the thermal insulation layer 39 over the heat exchange layer 37, thereby enhancing the thermal insulation effect of the thermal insulation layer 39.

Certainly, in other embodiments, the thermal insulation layer 39 may alternatively be disposed at a top or on a side surface of the battery cell assembly 10.

Herein, the thermal conductivity of the thermal insulation layer 39 may be set to be lower than the thermal conductivity of the heat exchange layer 37. The thermal insulation layer 39 is configured to provide thermal insulation, while the heat exchange layer 37 is configured to provide heat exchange with the battery cell assembly 10.

It can be understood that the heat exchange layer 37 is a flexible structure, while the thermal insulation layer 39 may be a flexible structure or a non-flexible structure.

In this embodiment, the heat exchange medium flows within the heat exchange layer 37 and exchanges heat with the battery cell assembly 10, while the thermal insulation layer 39 located on the side of the heat exchange layer 37 facing away from the battery cell assembly 10 provides thermal insulation. This structure is simple.

In some embodiments, referring to FIGs. 10 and 11, the thermal insulation layer 39 and the heat exchange layer 37 are stacked, and a flange 392 is formed at an edge of the heat exchange assembly 30, where the flange 392 surrounds a peripheral side of the battery cell assembly 10 or the case assembly 20.

That is, the heat exchange assembly 30 is formed by stacking the thermal insulation layer 39 and the heat exchange layer 37.

The flange 392 surrounds the peripheral side of the battery cell assembly 10 or the case assembly 20, forming a boat-like structure with the flange 392. For example, in an embodiment that the heat exchange assembly 30 is disposed within the first accommodating cavity 23, the flange 392 surrounds the peripheral side of the battery cell assembly 10, and the thermal insulation layer 39 packages the heat exchange layer 37 between the thermal insulation layer 39 and the battery cell assembly 10.

In an embodiment that the heat exchange assembly 30 is disposed within the second accommodating cavity 24, the flange 392 surrounds the peripheral side of the case assembly 20, and the thermal insulation layer 39 packages the heat exchange layer 37 between the thermal insulation layer 39 and the case assembly 20.

Herein, the flange 392 may include a thermal insulation cavity 391 or a low-thermal-conductivity insulating medium filled within the thermal insulation cavity 391, enhancing the side protection performance of the battery apparatus 100.

In this embodiment, the flange 392 is formed at the edge of the heat exchange assembly 30, where the flange 392 surrounds the peripheral side of the battery cell assembly 10 or the case assembly 20, further improving thermal insulation performance while improving the side protection performance of the battery apparatus 100.

In some embodiments, referring to FIGs. 10 and 11, a thermal insulation cavity 391 is disposed within the thermal insulation layer 39.

In this embodiment, the thermal insulation cavity 391 is provided within the thermal insulation layer 39. The arrangement of the cavity helps to improve heat exchange between the heat exchange medium within the medium flow channel 32 and an external environment, that is, providing thermal insulation for the battery cell assembly 10, thereby addressing the problem of low peripheral temperature of the battery cell assembly 10. Additionally, the arrangement of the thermal insulation cavity 391 provides a buffering effect, that is, offering a protection function, thereby improving the impact resistance performance of the battery apparatus 100.

In some embodiments, referring to FIGs. 10 and 11, the thermal insulation cavity 391 is filled with an insulating medium, where a thermal conductivity of the insulating medium is lower than a thermal conductivity of the thermal insulation layer 39.

Herein, the insulating medium is not limited to a specific type, as long as its thermal conductivity is lower than the thermal conductivity of the thermal insulation layer 39.

In this embodiment, the thermal insulation cavity 391 is filled with the insulating medium, improving heat exchange between the heat exchange medium within the medium flow channel 32 and the external environment, that is, providing thermal insulation for the battery cell assembly 10, thereby addressing the problem of low peripheral temperature of the battery cell assembly 10.

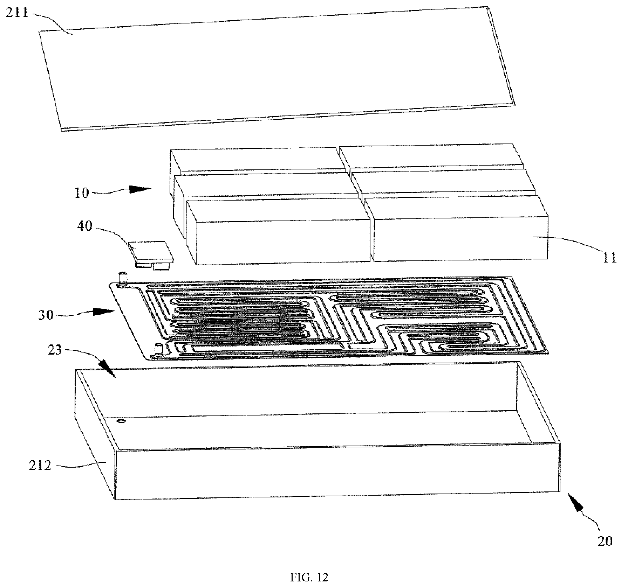

In some embodiments, referring to FIGs. 12 to 15, the heat exchange layer 37 includes at least two medium flow channels 32. The battery apparatus 100 further includes a switch assembly 40, where the switch assembly 40 is disposed on the heat exchange assembly 30 and is configured to control a cross-sectional flow area of at least one medium flow channel 32.

The switch assembly 40 being configured to control the cross-sectional flow area of the at least one medium flow channel 32 means that the switch assembly 40 may be configured to control the cross-sectional flow area of one medium flow channel 32 or control the cross-sectional flow areas of a plurality of medium flow channels 32, such as controlling the cross-sectional flow areas of all medium flow channels 32.

It should be noted that a flow cross-section refers to a transverse plane orthogonal to all streamlines of an elementary flow or composite flow, that is, a surface perpendicular to a flow velocity cluster, such as gas or liquid flow. When the streamline clusters are not parallel to each other, the flow cross-section is a curved surface; when the streamline clusters are parallel straight lines, the flow cross-section is a plane.

The switch assembly 40 is configured to control the cross-sectional flow area of at least one medium flow channel 32, meaning that the flow rates of the heat exchange mediums in various medium flow channels 32 can be adjusted according to temperature differences in different regions of the battery apparatus 100.

Herein, initial cross-sectional flow areas of various medium flow channels 32 may be the same or different.

It should be noted that a specific position of the switch assembly 40 is not limited herein. For example, the switch assembly 40 is disposed near the inlet 35 or near the outlet 36, facilitating full utilization of space at the inlet 35 or the outlet 36, thereby improving the structural compactness of the battery apparatus 100 and increasing the energy density of the battery apparatus 100.

In this embodiment, the switch assembly 40 is disposed to control the cross-sectional flow area of at least one medium flow channel 32, so that the cross-sectional flow area of the corresponding medium flow channel 32 can be dynamically adjusted based on temperature changes in different regions of the battery apparatus 100, implementing dynamic allocation of flow of the heat exchange medium. This helps to improve heat dissipation performance in high-temperature regions of the battery apparatus 100, thereby improving the thermal management performance and temperature uniformity of the battery apparatus 100.

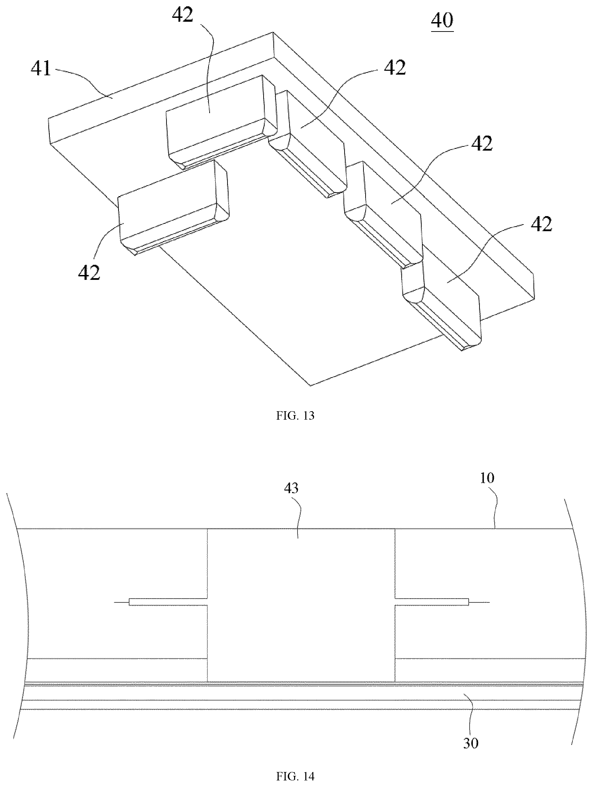

In some embodiments, referring to FIGs. 12 and 13, the switch assembly 40 includes at least two control members 42, where each control member 42 corresponds to a different medium flow channel 32, and the at least two control members 42 is capable of compressing the medium flow channel 32 through movement.

The switch assembly 40 is provided with a plurality of control members 42, where each control member 42 corresponds to a different medium flow channel 32. That means, the medium flow channels 32 can be compressed by controlling the control members 42, and the cross-sectional flow area of each medium flow channel 32 can be controlled by moving each control member 42 close to or far from the respective medium flow channel 32.

It should be noted that the control of the cross-sectional flow area of each medium flow channel 32 by each control member 42 may be fixed differential control, where differences in the cross-sectional flow area between the medium flow channels 32 are fixed, requiring simultaneous adjustment of the cross-sectional flow areas of all medium flow channels 32. Alternatively, it may be dynamic differential control, where differences in the cross-sectional flow areas between the medium flow channels 32 are not fixed, not requiring simultaneous adjustment of the cross-sectional flow areas of all medium flow channels 32.

In this embodiment, since the flexible member 31 is a flexible structure, the cross-sectional flow area of each medium flow channel 32 can be controlled by moving the control member 42 close to or far from the respective medium flow channel 32.

In some embodiments, referring to FIG. 13, the switch assembly 40 further includes a connecting plate 41, where one end of each control member 42 is connected to the connecting plate 41, a free end of each control member 42 is configured to compress the medium flow channel 32, and a distance between the free end of at least one control member 42 and the connecting plate 41 is different from a distance between the free end of any other control member 42 and the connecting plate 41.

One end of each control member 42 is connected to the connecting plate 41, meaning that the connecting plate 41 is configured to assemble each control member 42, allowing simultaneous movement of all control members 42 with a same displacement by controlling movement of the connecting plate 41.

Herein, the connecting plate 41 may alternatively be a connecting block.

Herein, the control member 42 may be, for example, a control plate or a control block.

An end of each control member 42 far from the connecting plate 41 is a free end of the control member 42, and the free end of each control member 42 is configured to compress the medium flow channel 32.

A distance between the free end of at least one control member 42 and the connecting plate 41 is different from a distance between the free end of any other control member 42 and the connecting plate 41, that is, heights of the control members 42 are not all the same. The heights of the control members 42 can be set differently as needed, so that the distances from the control members 42 to the respective medium flow channels 32 are also different, thereby implementing fixed differential control of each control member 42 over the respective medium flow channel 32.

In this embodiment, the heights of the control members 42 are set to be different, so that fixed differential control of each control member 42 over the respective medium flow channel 32 can be implemented by controlling the connecting plate 41 to move close to or far from the heat exchange assembly 30. The movement method and control method of the control switch are simple and reliable.

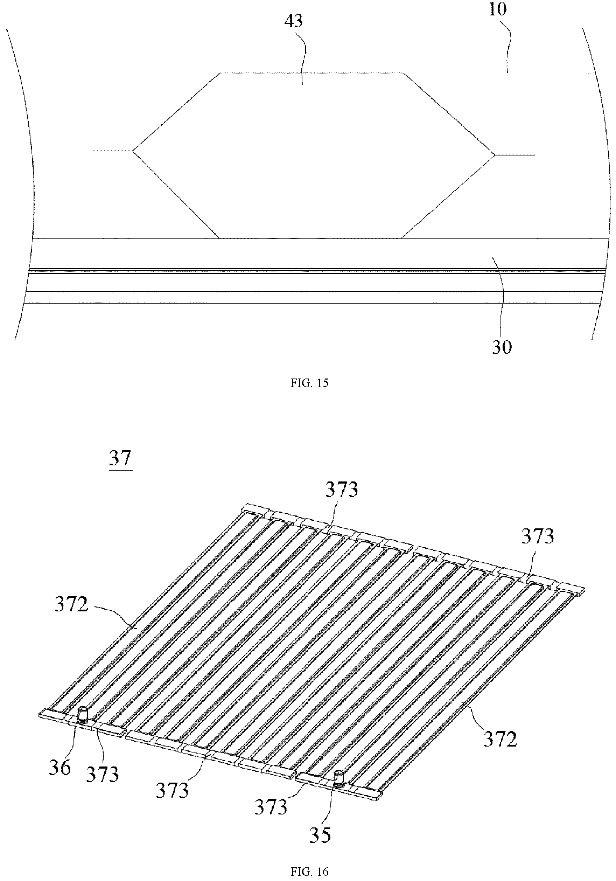

In some embodiments, referring to FIGs. 14 and 15, the switch assembly 40 includes a thermostat 43, where the thermostat 43 is disposed between the battery cell assembly 10 and the heat exchange assembly 30, and an arrangement direction of the battery cell assembly 10, the thermostat 43, and the heat exchange assembly 30 is defined as a first direction. In a state that a temperature of the battery cell assembly 10 increases, the thermostat 43 absorbs heat and expands in a direction perpendicular to the first direction while contracting in the first direction, reducing compression on the medium flow channel 32 by the thermostat 43.

Herein, the first direction is not limited, and in the embodiments of the present disclosure, the first direction being a height direction is used as an example.

The thermostat 43 is disposed between the battery cell assembly 10 and the heat exchange assembly 30. For example, the thermostat 43 is located at the bottom of the battery cell assembly 10 and above the heat exchange assembly 30.

It should be noted that a specific structure of the thermostat 43 is not limited herein. For example, an interior of the thermostat 43 is made of a temperature control material, where the temperature control material rapidly expands upon heating and contracts upon cooling. A housing of the thermostat 43 is made of an elastic material, facilitating expansion or contraction of the thermostat 43.

Herein, one thermostat 43 may correspond to one medium flow channel 32, or one thermostat 43 may correspond to a plurality of medium flow channels 32.

In this embodiment, the thermostat 43 is disposed. In a state that the temperature of the battery cell assembly 10 increases, the thermostat 43 absorbs heat and expands in a direction perpendicular to the first direction while contracting in the first direction, reducing a dimension of the thermostat 43 in the first direction, thereby reducing the compression on the medium flow channel 32 by the thermostat 43. This increases the cross-sectional flow area of the corresponding medium flow channel 32 in that region, improving heat dissipation in that region, thereby implementing automatic control of the cross-sectional flow area of the medium flow channel 32.

In some embodiments, a width of at least one medium flow channel 32 is different from a width of any other medium flow channel 32.

That is, the widths of the medium flow channels 32 are not all the same, meaning that the initial cross-sectional flow areas of the medium flow channels 32 are different.

It should be noted that a larger width of the medium flow channel 32 indicates a larger cross-sectional flow area of the medium flow channel 32, resulting in a larger flow rate of the heat exchange medium within the corresponding medium flow channel 32. In other words, the cross-sectional flow area of the medium flow channel 32 is controlled based on the width of the medium flow channel 32.

In this embodiment, the widths of the medium flow channels 32 can be designed differently based on the heat dissipation needs of different regions of the battery apparatus 100. For example, generally, the width of the medium flow channel 32 corresponding to a high-temperature region of the battery apparatus 100 is larger, and the width of the medium flow channel 32 corresponding to a low-temperature region of the battery apparatus 100 is smaller. This allows accurate adjustment of the overall temperature of the battery apparatus 100 by allocating the flow rates of the heat exchange medium based on temperature changes in different regions of the battery apparatus 100. This improves the heat exchange efficiency and effect of the heat exchange assembly 30, thereby enhancing the thermal management performance and temperature uniformity of the battery apparatus 100.

In some embodiments, referring to FIGs. 16 to 19, the heat exchange layer 37 includes a plurality of heat exchange units 372, a plurality of current collectors 373, and a plurality of connecting pipes 374. An interior of the heat exchange unit 372 has a medium flow channel 32, an interior of the current collector 373 has a current collection space, and two ends of the heat exchange unit 372 are respectively connected to the current collector 373 via the connecting pipe 374, forming a medium flow path for the heat exchange medium to flow through.

That is, the heat exchange unit 372 is made into a standard unit, and the heat exchange assembly 30 is formed by assembling a plurality of heat exchange units 372.

Herein, a specific structure of the connecting pipe 374 is not limited, for example, may be a rigid pipe fitting.

The medium flow path is defined jointly by the medium flow channel 32 and the current collection space.

In this embodiment, the heat exchange assembly 30 is designed to include a plurality of heat exchange units 372, a plurality of current collectors 373, and a plurality of connecting pipes 374, where two ends of the heat exchange unit 372 are connected to the current collector 373 via the connecting pipe 374, forming the medium flow path for the heat exchange medium to flow through. In other words, the heat exchange assembly 30 can be made into heat exchange units 372 in standard unit form. Corresponding heat exchange units 372 can be selected and assembled to form a suitable heat exchange assembly 30 based on a structure of the battery cell assembly 10, thereby reducing the development cycle of the heat exchange assembly 30 and improving the research and development efficiency of the battery apparatus 100.

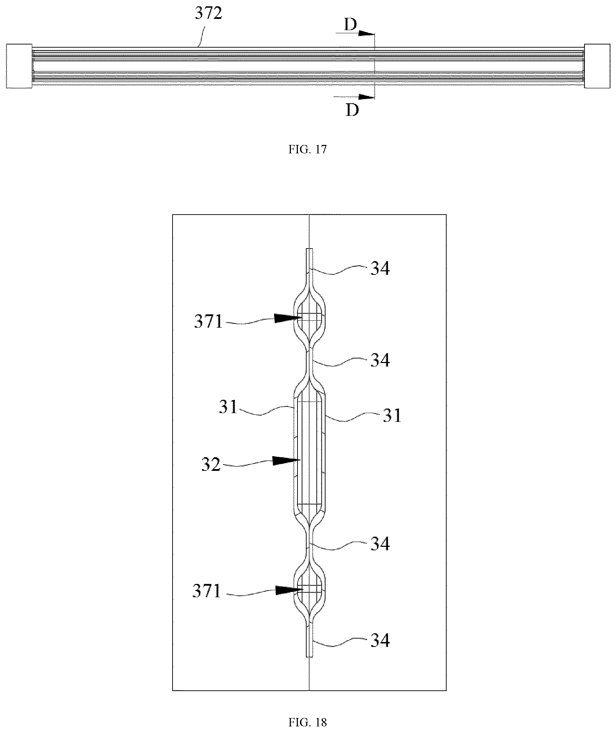

In some embodiments, referring to FIGs. 17 and 18, an interior of the heat exchange unit 372 has a buffer cavity 371 spaced apart from the medium flow channel 32, and the medium flow channel 32 is provided with the buffer cavity 371 on at least one side in a width direction of the heat exchange unit 372.

The buffer cavity 371 is spaced apart from the medium flow channel 32, meaning that the buffer cavity 371 and the medium flow channel 32 are independent of each other, that is, the buffer cavity 371 is not in communication with the medium flow channel 32.

Herein, for example, the buffer cavity 371 is formed by hot pressing when the medium flow channel 32 is being formed by hot pressing.

The buffer cavity 371 is filled with gas, providing a buffering effect when the heat exchange assembly 30 is impacted.

The medium flow channel 32 being provided with the buffer cavity 371 on at least one side in the width direction of the heat exchange unit 372 means that the buffer cavity 371 is disposed at an edge of the medium flow channel 32, improving the buffering effect. The buffer cavity 371 may be provided on one side of the medium flow channel 32 in the width direction of the heat exchange unit 372, or the buffer cavity 371 may be provided on two sides of the medium flow channel 32 in the width direction of the heat exchange unit 372.

In this embodiment, the buffer cavity 371 is disposed on at least one side of the medium flow channel 32 in the width direction of the heat exchange unit 372, providing a buffer effect for the heat exchange assembly 30 upon impact. Additionally, the buffer cavity 371 is disposed at the edge of the medium flow channel 32, improving the buffer effect.

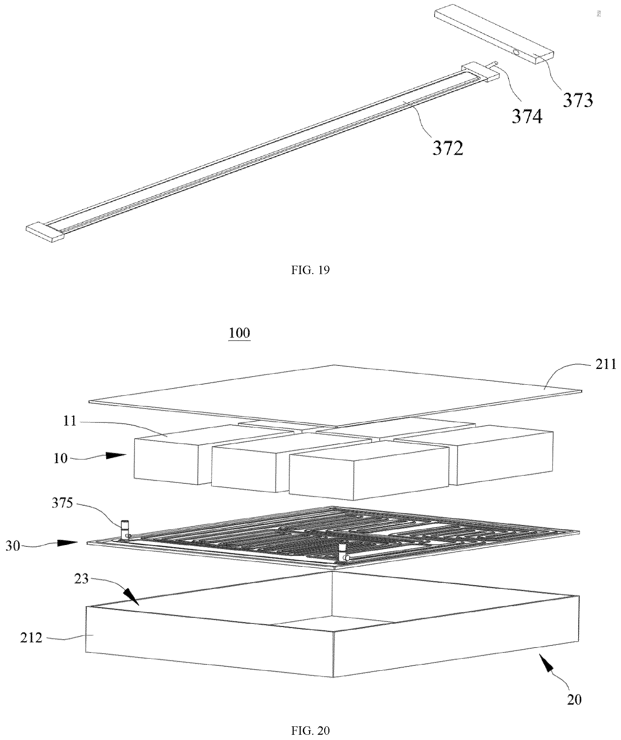

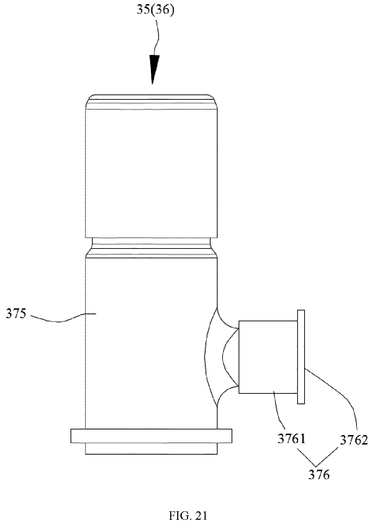

In some embodiments, referring to FIGs. 20 to 22, the heat exchange layer 37 includes a quick-change joint 376 and a quick-change interface 3754, where the quick-change interface 3754 is in communication with the medium flow channel 32, and the quick-change joint 376 is disposed at the quick-change interface 3754 and closes the quick-change interface 3754. In a state that a pressure of the heat exchange assembly 30 reaches a specified value, the quick-change joint 376 opens the quick-change interface 3754, and the heat exchange medium is discharged through the quick-change interface 3754. The at least two flexible members 31 are arranged as a flexible structure.

The heat exchange assembly 30 includes the quick-change joint 376 and the quick-change interface 3754. In a normal use state, the quick-change joint 376 closes the quick-change interface 3754, meaning that the provision of the quick-change joint 376 and the quick-change interface 3754 does not affect the normal use of the heat exchange assembly 30.

In a state that the pressure of the heat exchange assembly 30 reaches the specified value, the quick-change joint 376 opens the quick-change interface 3754, allowing the heat exchange medium to be directionally discharged through the quick-change interface 3754, thereby preventing damage to other parts of the heat exchange assembly 30 to some extent. This allows continued use with replacement of only the quick-change joint 376, with no need to replace the entire battery apparatus 100, thereby facilitating maintenance and reducing costs. Additionally, through directional discharge of the heat exchange medium, the discharged heat exchange medium can be collected or further discharged to the external environment.

Herein, the quick-change joint 376 is, for example, a standard component, allowing rapid replacement and maintenance.

It should be noted that the specified value in the embodiments of the present disclosure is an absolute numerical value, and the present disclosure does not specifically limit the specified value. The specified value can be set based on the usage conditions of the battery apparatus 100 and a specific structure of the heat exchange assembly 30, for example, based on a structural strength of the flexible member 31 of the heat exchange assembly 30.

It should be noted that the pressure of the heat exchange assembly 30 reaching the specified value includes a scenario where the pressure within the heat exchange assembly 30 reaches the specified value during misuse or extreme conditions, or where the pressure received by the heat exchange assembly 30 reaches the specified value after the vehicle is subjected to external force compression.

In this embodiment, the heat exchange assembly 30 is provided with the quick-change joint 376 and the quick-change interface 3754, where the quick-change joint 376 is disposed at the quick-change interface 3754. In a normal use state, the quick-change joint 376 closes the quick-change interface 3754. In a state that the pressure of the heat exchange assembly 30 reaches the specified value, the quick-change joint 376 opens the quick-change interface 3754, allowing the heat exchange medium to be directionally discharged through the quick-change interface 3754. This allows continued use with replacement of only the quick-change joint 376, with no need to replace the entire battery apparatus 100, thereby facilitating maintenance and reducing costs.

In some embodiments, referring to FIGs. 20 to 22, the heat exchange assembly 30 further includes a connecting port, where the connecting port is in communication with the medium flow channel 32, the heat exchange medium flows into or out of the medium flow channel 32 via the connecting port, and the quick-change interface 3754 is disposed near the connecting port.

Herein, the connecting port is the inlet 35 or the outlet 36, where the inlet 35 and the outlet 36 are configured to be connected to pipelines of the vehicle.

In this embodiment, the quick-change interface 3754 is disposed near the connecting port, that is, disposed near the inlet 35 or the outlet 36. This facilitates full utilization of space at the inlet 35 or the outlet 36, improving the structural compactness of the battery apparatus 100 and increasing the energy density of the battery apparatus 100. Additionally, this facilitates collection of the heat exchange medium discharged from the quick-change interface 3754 or its diversion to a preset location.

In some embodiments, referring again to FIGs. 20 to 22, the heat exchange assembly 30 includes a connector 375, where the connector 375 is connected to the flexible member 31, a connecting channel 3751 having the connecting port is formed on the connector 375, an end of the connecting channel 3751 far from the connecting port is in communication with the medium flow channel 32, a side wall of the connector 375 protrudes and is provided with a quick-change branch 3752, a drainage channel 3753 having the quick-change interface 3754 is formed on the quick-change branch 3752, and an end of the drainage channel 3753 far from the quick-change interface 3754 is in communication with the connecting channel 3751.

Herein, the connector 375 may be an inlet nozzle, where the connecting port corresponding to the inlet nozzle is an inlet port, or the connector 375 may be an outlet nozzle, where the connecting port corresponding to the outlet nozzle is an outlet port.

The side wall of the connector 375 protrudes and is provided with the quick-change branch 3752, the drainage channel 3753 having the quick-change interface 3754 is formed on the quick-change branch 3752, and the end of the drainage channel 3753 far from the quick-change interface 3754 is in communication with the connecting channel 3751. In other words, the quick-change branch 3752 is integrated into the connector 375, and the quick-change joint 376 is disposed on the quick-change branch 3752.

In this embodiment, the quick-change branch 3752 is integrated into the connector 375 and the quick-change joint 376 is disposed on the quick-change branch 3752. Thus, on one hand, in a state that the pressure of the heat exchange assembly 30 reaches the specified value, the quick-change joint 376 opens the quick-change interface 3754 to implement directional discharge of the heat exchange medium through the quick-change interface 3754. On the other hand, this reduces the number of components and installation space, improving assembly efficiency.

It should be noted that a specific structure of the quick-change joint 376 is not limited herein.

For example, the quick-change joint 376 includes a connecting cylinder 3761 arranged in an annular shape and a baffle 3762 disposed at one end of the connecting cylinder 3761 in an axial direction. The quick-change joint 376 is connected to the quick-change branch 3752 via the connecting cylinder 3761 and, together with the baffle 3762, closes the quick-change interface 3754.

It should be noted that a specific connection method between the quick-change joint 376 and the quick-change branch 3752 is not limited herein.

For example, the quick-change joint 376 and the quick-change branch 3752 are snap-connected.

In some embodiments, referring to FIGs. 20 to 22, an outer side wall of the quick-change branch 3752 is provided with a first slot, the quick-change joint 376 is provided with a first buckle, and the first buckle engages with the first slot.

Herein, the outer side wall of the quick-change branch 3752 may be provided with a continuous annular first slot or may be provided with a plurality of spaced first slots, and the first buckle is adapted to the first slot.

Specifically, an inner side wall of the connecting cylinder 3761 of the quick-change joint 376 is provided with a circle of first buckle.

In this embodiment, the quick-change joint 376 and the quick-change branch 3752 are connected by the first buckle engaging with the first slot. Such structure is simple, helping to improve assembly efficiency.

Certainly, in some other embodiments, an inner side wall of the quick-change joint 376 may be provided with a first slot, and the quick-change branch 3752 may be provided with a first buckle, where the first buckle engages with the first slot.

In some embodiments, referring to FIGs. 20 to 22, an outer side wall of the connector 375 is provided with a second slot, where the second slot is configured to engage with an external pipeline.

Herein, the outer side wall of the connector 375 may be provided with a continuous annular second slot, or may be a plurality of spaced second slots, and the external pipeline is provided with a second buckle, where the second buckle is adapted to the second slot.

In this embodiment, the connector 375 and the external pipeline are connected by the second buckle engaging with the second slot. Such structure is simple, helping to improve assembly efficiency.

Certainly, in some other embodiments, an inner side wall of the external pipeline may be provided with a second slot, and the connector 375 may be provided with a second buckle, where the second buckle engages with the second slot.

In some embodiments, referring to FIGs. 20 to 22, the quick-change joint 376 includes a body and a sealing structure, where the sealing structure is sealingly connected to the body. In a state that a pressure of the heat exchange assembly 30 reaches a specified value, the sealing structure fails, and the heat exchange medium is discharged through the sealing port.

Herein, the body and the sealing structure may be an integrally formed structure, for example, a partial region of the quick-change joint 376 is thinned to form the sealing structure. In a normal use state, the sealing structure is sealingly connected to the body, and the quick-change joint 376 closes the quick-change interface 3754. In a state that the pressure of the heat exchange assembly 30 reaches the specified value, the pressure damages the sealing structure, causing the sealing structure to fail, and the quick-change joint 376 opens the quick-change interface 3754.

Certainly, the body and the sealing structure may be split structures, for example, the sealing structure may be a sealing film, the body is provided with a sealing port, and the sealing film is sealingly disposed at the sealing port. In a normal use state, the sealing film is sealingly connected to the body, and the quick-change joint 376 closes the quick-change interface 3754. In a state that the pressure of the heat exchange assembly 30 reaches the specified value, the pressure damages the sealing film, causing the sealing structure to fail, and the quick-change joint 376 opens the quick-change interface 3754.

Herein, a connection method between the quick-change joint 376 and the quick-change branch 3752 is not limited, and may be, for example, threaded connection, fastened connection, snap-fit connection, or the like.

In this embodiment, the quick-change joint 376 is designed to include the body and the sealing structure. In a normal use state, the sealing structure is sealingly connected to the body, and the quick-change joint 376 closes the quick-change interface 3754. In a state that the pressure of the heat exchange assembly 30 reaches the specified value, the pressure damages the sealing structure, causing the sealing structure to fail, and the quick-change joint 376 opens the quick-change interface 3754, allowing directional discharge of the heat exchange medium through the quick-change interface 3754. This allows continued use with replacement of only the quick-change joint 376, with no need to replace the entire battery apparatus 100, thereby facilitating maintenance and reducing costs.

In some embodiments, referring to FIGs. 20 to 22, the heat exchange assembly 30 further includes a sealing member (not shown in the figures), where the sealing member is sealingly sandwiched between the quick-change branch 3752 and the quick-change joint 376.

Herein, the sealing member is not limited to a specific structure, for example, may be a sealing ring.

In this embodiment, the sealing member is disposed between the quick-change branch 3752 and the quick-change joint 376 to seal an assembly gap between the quick-change branch 3752 and the quick-change joint 376. This prevents leakage of the heat exchange medium from the assembly gap between the quick-change branch 3752 and the quick-change joint 376 to some extent, thereby improving sealing performance between the quick-change branch 3752 and the quick-change joint 376.

In some embodiments, referring to FIGs. 20 to 22, a bonding strength between the connector 375 and the quick-change joint 376 is less than a bonding strength between the connector 375 and the external pipeline.

Herein, the bonding strength between the connector 375 and the quick-change joint 376 refers to a connection strength or pressure resistance strength of a connection structure between the connector 375 and the quick-change joint 376, and the bonding strength between the connector 375 and the external pipeline refers to a connection strength or pressure resistance strength of a connection structure between the connector 375 and the external pipeline.

Thus, in a state that a pressure of the heat exchange assembly 30 reaches a specified value, the connection structure between the quick-change branch 3752 and the quick-change joint 376 can be disrupted, thereby allowing the quick-change interface 3754 to communicate with an external environment to implement directional discharge of the heat exchange medium, while preventing damage to the connection structure between the connector 375 and the external pipeline to some extent.

In a specific embodiment, referring to FIGs. 2 to 4, a battery apparatus includes a case assembly 20, a battery cell assembly 10, and a heat exchange assembly 30. The case assembly 20 has a first accommodating cavity 23 inside. The battery cell assembly 10 is disposed within the first accommodating cavity 23. The heat exchange assembly 30 is disposed within the case assembly 20. The heat exchange assembly 30 includes at least two flexible members 31. Referring to FIG. 3, the at least two flexible members 31 are stacked, and at least one medium flow channel 32 is formed between the flexible members 31, where the at least one medium flow channel 32 is configured to circulate a heat exchange medium, and the heat exchange medium is configured to exchange heat with the battery cell assembly 10. The case assembly 20 includes a case body 21 and a bottom guard plate 22. The case body 21 may include a first case portion 211 and a second case portion 212, the first case portion 211 and the second case portion 212 are engaged with each other, and the first case portion 211 and the second case portion 212 together define the first accommodating cavity 23 for accommodating the battery cell assembly 10. A second accommodating cavity 24 is formed between the bottom guard plate 22 and an outer side wall of the case body 21. The heat exchange assembly 30 is disposed within the second accommodating cavity 24. Part of the bottom guard plate 22 protrudes to form a connecting portion 221, and the connecting portion 221 is sealingly connected to the second case portion 212. Part of the bottom guard plate 22 protrudes to form a limiting structure 222, the heat exchange assembly 30 is provided with a clearance hole 33, and the limiting structure 222 runs through the clearance hole 33 to support the second case portion 212. The limiting structure 222 is disposed in a central region of the second accommodating cavity 24. The at least two flexible members 31 are arranged as aluminum-plastic films. The at least two flexible members 31 include a hot-pressed region 34. The hot-pressed region 34 is formed by hot pressing the at least two flexible members 31. The hot-pressed region 34 divides the heat exchange assembly 30 to form the at least one medium flow channel 32. The heat exchange assembly 30 has a raised region 311 and a recessed region 312, where the medium flow channel 32 is formed within the raised region 311, the recessed region 312 is a region without the medium flow channel 32, and the limiting structure 222 abuts against the recessed region 312.

In a specific embodiment, the flexible member 31 is a layered structure, the flexible member 31 includes a corrosion-resistant layer, an isolation layer, and a waterproof layer arranged sequentially, and the waterproof layer is closer to the medium flow channel 32 than the corrosion-resistant layer. A thickness of the isolation layer is 6.5 μm to 15 μm. A thickness of the corrosion-resistant layer is 5 μm to 20 μm. A thickness of the waterproof layer is 50 μm to 120 μm. A thickness of the flexible member 31 is 0.05 mm to 0.3 mm. An elastic modulus of the flexible member 31 is 0.1 MPa to 10000 MPa.

It should be noted that a width of the sealing member can be measured using a vernier caliper before assembly; a spacing between an edge of the clearance hole 33 and the limiting structure 222 can be measured using a vernier caliper after the heat exchange assembly is assembled to the case assembly; a width of the hot-pressed region 34 can be measured using a vernier caliper before assembly; thicknesses of the corrosion-resistant layer, the isolation layer, and the waterproof layer can be measured using a vernier caliper; and a thickness of the flexible member 31 can be measured using a vernier caliper before assembly. It should be noted that the above measurements can all be performed under normal temperature and pressure.

A method for measuring the elastic modulus of the flexible member 31 may include at least one of a static tensile test method, a dynamic test method, a sound velocity method, a nanoindentation method, and a bending method. Measurement instruments may include a nanoindenter and a universal testing machine.

For example, the elastic modulus of the flexible member 31 can be measured under normal temperature and pressure using the nanoindentation method. In the nanoindentation method, a micro-indenter is used to indent a surface of the flexible member 31, and the elastic modulus is calculated by analyzing a relationship between indentation depths and loads.

In the description of the present disclosure, references to terms such as "in one embodiment", "in some embodiments", "in other embodiments", "in yet other embodiments", or "exemplary" indicate that specific features, structures, materials, or characteristics described in connection with the embodiment or example are included in at least one embodiment or example of the present disclosure. In the present disclosure, schematic expressions of the above terms do not necessarily refer to the same embodiment or example. Moreover, the specific features, structures, materials, or characteristics described may be combined in any suitable manner in any one or more embodiments or examples. Additionally, in the absence of mutual contradiction, those skilled in the art may combine different embodiments or examples described in the present disclosure and features of different embodiments or examples.

The above descriptions are merely preferred embodiments of the present disclosure and are not intended to limit the present disclosure. For those skilled in the art, the present disclosure may have various modifications and changes. Any modifications, equivalent replacements, improvements, and the like made within the spirit and principles of the present disclosure are included within the protection scope of the present disclosure.

**Claims**

1. A battery apparatus, comprising:

   a case assembly having a first accommodating cavity inside;
   a battery cell assembly disposed within the first accommodating cavity; and
   a heat exchange assembly disposed within the case assembly; wherein the heat exchange assembly comprises at least two flexible members, the at least two flexible members are stacked, and at least one medium flow channel is formed between the flexible members, wherein the at least one medium flow channel is configured to circulate a heat exchange medium, and the heat exchange medium is configured to exchange heat with the battery cell assembly.

2. The battery apparatus according to claim 1, wherein the heat exchange assembly is disposed outside the first accommodating cavity.

3. The battery apparatus according to claim 2, wherein the case assembly comprises a case body and a bottom guard plate, the case body comprises a first case portion and a second case portion, the first accommodating cavity is formed between the first case portion and the second case portion, a second accommodating cavity is formed between a bottom wall of the second case portion and the bottom guard plate, and the heat exchange assembly is disposed within the second accommodating cavity.

4. The battery apparatus according to claim 3, wherein part of the bottom guard plate protrudes to form a connecting portion, and the connecting portion is sealingly connected to the second case portion.

5. The battery apparatus according to claim 4, wherein the case assembly further comprises a sealing member, and the sealing member is sealingly sandwiched between the connecting portion and the second case portion.

6. The battery apparatus according to claim 5, wherein a width of the sealing member is 2 mm to 20 mm.

7. The battery apparatus according to any one of claims 3 to 6, wherein part of the bottom guard plate protrudes to form a limiting structure, and the limiting structure is configured to support the heat exchange assembly.

8. The battery apparatus according to any one of claims 3 to 7, wherein part of the bottom guard plate protrudes to form a limiting structure, the heat exchange assembly is provided with a clearance hole, and the limiting structure runs through the clearance hole to support the second case portion.

9. The battery apparatus according to any one of claims 3 to 7, wherein part of the second case portion protrudes to form a limiting structure, and the limiting structure is configured to support the heat exchange assembly.

10. The battery apparatus according to any one of claims 3 to 7, wherein part of the second case portion protrudes to form a limiting structure, the heat exchange assembly is provided with a clearance hole, and the limiting structure runs through the clearance hole to support the bottom guard plate.

11. The battery apparatus according to claim 8 or 10, wherein a spacing between an edge of the clearance hole formed by the flexible member and the limiting structure is 0.5 mm to 1 mm.

12. The battery apparatus according to claim 8 or 10, wherein a height of the limiting structure is greater than or equal to a thickness of the heat exchange assembly.

13. The battery apparatus according to claim 7, wherein the limiting structure is disposed in a central region of the second accommodating cavity.

14. The battery apparatus according to claim 8 or 10, wherein the clearance hole is provided in plurality, and the plurality of clearance holes are symmetrically arranged with respective to a centerline of the heat exchange assembly.

15. The battery apparatus according to claim 8 or 10, wherein a length extension direction of the clearance hole is consistent with an arrangement direction of a plurality of battery cells in the battery cell assembly.

16. The battery apparatus according to claim 8, wherein a gap between the clearance hole and the limiting structure in a length direction is greater than or equal to 0 mm and less than or equal to 5 mm.

17. The battery apparatus according to claim 16, wherein the gap between the clearance hole and the limiting structure in the length direction is greater than or equal to 2 mm and less than or equal to 3 mm.

18. The battery apparatus according to any one of claims 1 to 17, wherein the at least two flexible members comprise a hot-pressed region, the hot-pressed region is formed by hot pressing the at least two flexible members, and the hot-pressed region divides the heat exchange assembly to form the at least one medium flow channel.

19. The battery apparatus according to claim 18, wherein a width of the hot-pressed region is 0.5 mm to 5 mm.

20. The battery apparatus according to claim 19, wherein the width of the hot-pressed region is 2 mm to 3 mm.

21. The battery apparatus according to any one of claims 18 to 20, wherein the hot-pressed region is provided with a clearance hole.

22. The battery apparatus according to any one of claims 1 to 6, wherein the case assembly is provided with a limiting structure, the heat exchange assembly has a raised region and a recessed region, the medium flow channel is formed within the raised region, the recessed region is a region without the medium flow channel, and the limiting structure abuts against the recessed region.

23. The battery apparatus according to claim 22, wherein the recessed region of the flexible member has a through clearance hole, and the limiting structure is inserted into the clearance hole.

24. The battery apparatus according to claim 23, wherein part of the case assembly forms the limiting structure, and the limiting structure runs through the clearance hole to abut against another part of the case assembly.

25. The battery apparatus according to claim 24, wherein the case assembly further comprises an adhesive layer, and the limiting structure is bonded to the another part of the case assembly through the adhesive layer.

26. The battery apparatus according to claim 24 or 25, wherein the case assembly comprises a case body and a bottom guard plate, the case body comprises a first case portion and a second case portion, the first accommodating cavity is formed between the first case portion and the second case portion, the second accommodating cavity is formed between the bottom guard plate and the second case portion, the heat exchange assembly is disposed within the second accommodating cavity, and the limiting structure is formed on a side of the bottom guard plate and/or the second case portion close to the second accommodating cavity.

27. The battery apparatus according to claim 26, wherein the heat exchange assembly is disposed within the first accommodating cavity, and the limiting structure is formed on a side of the first case portion and/or the second case portion close to the first accommodating cavity.

28. The battery apparatus according to any one of claims 1 to 27, wherein the at least two flexible members are arranged as metal-plastic composite films.

29. The battery apparatus according to claim 28, wherein the at least two flexible members are arranged as aluminum-plastic films.

30. The battery apparatus according to any one of claims 1 to 29, wherein the flexible member is a layered structure, the flexible member comprises a metal layer and a non-metal layer, and the metal layer and the non-metal layer are sequentially stacked.

31. The battery apparatus according to claim 30, wherein the metal layer comprises one or more of aluminum foil, copper foil, and steel foil.

32. The battery apparatus according to claim 30 or 31, wherein the non-metal layer comprises one or more of polypropylene, polyvinyl chloride, and polyethylene.

33. The battery apparatus according to any one of claims 30 to 32, wherein the non-metal layer is a hot-melt layer.

34. The battery apparatus according to any one of claims 1 to 29, wherein the flexible member is a layered structure, the flexible member comprises a corrosion-resistant layer, an isolation layer, and a waterproof layer arranged sequentially, and the waterproof layer is closer to the medium flow channel than the corrosion-resistant layer.

35. The battery apparatus according to claim 34, wherein a thickness of the isolation layer is 6.5 $\mu$m to 100 $\mu$m.

36. The battery apparatus according to claim 35, wherein the thickness of the isolation layer is 6.5 $\mu$m to 15 $\mu$m.

37. The battery apparatus according to any one of claims 34 to 36, wherein a thickness of the corrosion-resistant layer is 5 $\mu$m to 20 $\mu$m.

38. The battery apparatus according to any one of claims 34 to 37, wherein a thickness of the waterproof layer

is 50 $\mu$m to 120 $\mu$m.

39. The battery apparatus according to any one of claims 1 to 38, wherein a thickness of the flexible member is 0.05 mm to 0.3 mm.

40. The battery apparatus according to claim 39, wherein the thickness of the flexible member is 0.08 mm to 0.2 mm.

41. The battery apparatus according to any one of claims 1 to 40, wherein an elastic modulus of the flexible member is 0.1 MPa to 10000 MPa.

42. A heat exchange assembly, wherein the heat exchange assembly comprises at least two flexible members, the at least two flexible members are stacked, and at least one medium flow channel is formed between the flexible members, wherein the at least one medium flow channel is configured to circulate a heat exchange medium, and the heat exchange medium is configured to exchange heat with a heat exchange unit assembly.

43. The heat exchange assembly according to claim 42, wherein the heat exchange assembly is provided with a clearance hole, and the clearance hole extends through two opposite sides of the heat exchange assembly.

44. The heat exchange assembly according to claim 43, wherein the clearance hole is provided in plurality, and the plurality of clearance holes are symmetrically arranged with respective to a centerline of the heat exchange assembly.

45. The heat exchange assembly according to any one of claims 42 to 44, wherein the at least two flexible members comprise a hot-pressed region, the hot-pressed region is formed by hot pressing the at least two flexible members, and the hot-pressed region divides the heat exchange assembly to form the at least one medium flow channel.

46. The heat exchange assembly according to claim 45, wherein a width of the hot-pressed region is 0.5 mm to 5 mm.

47. The heat exchange assembly according to claim 46, wherein the width of the hot-pressed region is 2 mm to 3 mm.

48. The heat exchange assembly according to any one of claims 45 to 47, wherein the hot-pressed region is provided with a clearance hole.

49. The heat exchange assembly according to any one of claims 42 to 48, wherein the heat exchange assembly has a raised region and a recessed region, the medium flow channel is formed within the raised region, the recessed region is a region without the medium flow channel, and the flexible member is formed in the recessed region by hot pressing.

50. The heat exchange assembly according to claim 49, wherein the recessed region is provided with a through clearance hole.

51. The heat exchange assembly according to any one of claims 42 to 50, wherein the at least two flexible members are arranged as metal-plastic composite films.

52. The heat exchange assembly according to claim 51, wherein the at least two flexible members are arranged as aluminum-plastic films.

53. The heat exchange assembly according to any one of claims 42 to 52, wherein the flexible member is a layered structure, the flexible member comprises a metal layer and a non-metal layer, and the metal layer and the non-metal layer are sequentially stacked.

54. The heat exchange assembly according to claim 53, wherein the metal layer comprises one or more of aluminum foil, copper foil, and steel foil.

55. The heat exchange assembly according to claim 53 or 54, wherein the non-metal layer comprises one or more of polypropylene, polyvinyl chloride, and polyethylene.

56. The heat exchange assembly according to any one of claims 53 to 55, wherein the non-metal layer is a hot-melt layer.

57. The heat exchange assembly according to any one of claims 42 to 56, wherein the flexible member is a layered structure, the flexible member comprises a corrosion-resistant layer, an isolation layer, and a waterproof layer arranged sequentially, and the waterproof layer is closer to the medium flow channel than the corrosion-resistant layer.

58. The heat exchange assembly according to claim 57, wherein a thickness of the isolation layer is 6.5 $\mu$m to 100 $\mu$m.

59. The heat exchange assembly according to claim 58, wherein the thickness of the isolation layer is 6.5 $\mu$m to 15 $\mu$m.

60. The heat exchange assembly according to any one of claims 57 to 59, wherein a thickness of the corrosion-resistant layer is 5 $\mu$m to 20 $\mu$m.

61. The heat exchange assembly according to any one of claims 57 to 60, wherein a thickness of the waterproof layer is 50 $\mu$m to 120 $\mu$m.

62. The heat exchange assembly according to any one of claims 42 to 61, wherein a thickness of the flexible member is 0.05 mm to 0.3 mm.

63. The heat exchange assembly according to claim 62, wherein the thickness of the flexible member is 0.08 mm to 0.2 mm.

64. The heat exchange assembly according to any one of claims 42 to 63, wherein an elastic modulus of the flexible member is 0.1 MPa to 10000 MPa.

65. An electric device, comprising the battery apparatus according to any one of claims 1 to 41 or the heat exchange assembly according to any one of claims 42 to 64.

66. An energy storage device, comprising the battery apparatus according to any one of claims 1 to 41 or the heat exchange assembly according to any one of claims 42 to 64.

1000

FIG. 1

100

FIG. 2

11    11    11

211    23

212

Z

A

Y

20

10

FIG. 3

11

10

31

212

31

24    222    22    32

32

34

FIG. 4

FIG. 5

FIG. 6

22

FIG. 7

FIG. 8

FIG. 9

FIG. 10

FIG. 11

FIG. 12

42

41

40

42

42

42

42

FIG. 13

43

10

30

FIG. 14

FIG. 15

FIG. 16

372

D

D

FIG. 17

34

371

34

31            31

32

34

371

34

FIG. 18

FIG. 19

100

FIG. 20

35(36)

375

3761    3762

376

FIG. 21

35(36)

375

3752

3751

3754

3753

FIG. 22

11

10

31

212

24

222

22

31

34

32

32

FIG. 23

## INTERNATIONAL SEARCH REPORT

International application No.

**PCT/CN2024/114643**

| A. | CLASSIFICATION OF SUBJECT MATTER |
|---|---|

H01M10/6567(2014.01)i; H01M10/655(2014.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 柔, 换热, 冷却, 流道, 支撑, 支持, batter+, cell?, core? , flexible, cool+, heat, exchang+, flow+, channel, support+

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 219717016 U (ENVISION POWER TECHNOLOGY (JIANGSU) CO., LTD. et al.) 19 September 2023 (2023-09-19) description, paragraphs 33-49, and figures 1-12 | 1-66 |
| X | CN 211480233 U (NINGBO GEELY AUTOMOBILE RESEARCH & DEVELOPMENT CO., LTD. et al.) 11 September 2020 (2020-09-11) description, paragraphs 34-46, and figures 1-8 | 1-66 |
| X | CN 220491990 U (SUNWODA POWER TECHNOLOGY CO., LTD.) 13 February 2024 (2024-02-13) description, paragraphs 38-72, and figures 1-12 | 1, 42, 65-66 |
| X | CN 110770931 A (ROBERT BOSCH CO., LTD.) 07 February 2020 (2020-02-07) description, paragraphs 57-74, and figures 1-5 | 1, 42, 65-66 |
| A | CN 218996844 U (BYD CO., LTD.) 09 May 2023 (2023-05-09) entire document | 1-66 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 May 2025** | **22 May 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/114643**

| Patent document cited in search report | | | Publication date (day/month/year) | Patent family member(s) | | | Publication date (day/month/year) |
|---|---|---|---|---|---|---|---|
| CN | 219717016 | U | 19 September 2023 | None | | | |
| CN | 211480233 | U | 11 September 2020 | None | | | |
| CN | 220491990 | U | 13 February 2024 | None | | | |
| CN | 110770931 | A | 07 February 2020 | WO | 2018233902 | A1 | 27 December 2018 |
| | | | | EP | 3642891 | A1 | 29 April 2020 |
| | | | | DE | 102017210343 | A1 | 27 December 2018 |
| CN | 218996844 | U | 09 May 2023 | None | | | |

Form PCT/ISA/210 (patent family annex) (July 2022)